(19) Europäisches Patentamt / European Patent Office / Office européen des brevets

(11) **EP 4 357 809 B1**

(12) **EUROPÄISCHE PATENTSCHRIFT**

(45) Veröffentlichungstag und Bekanntmachung des Hinweises auf die Patenterteilung:
**24.09.2025 Patentblatt 2025/39**

(21) Anmeldenummer: **23203375.3**

(22) Anmeldetag: **13.10.2023**

(51) Internationale Patentklassifikation (IPC):
**G01S 7/497** (2006.01)    **G01S 17/86** (2020.01)
**G01S 17/931** (2020.01)

(52) Gemeinsame Patentklassifikation (CPC):
**G01S 17/86; G01S 7/4972; G01S 17/931**

(54) **VERFAHREN ZUR POSITIONSKALIBRIERUNG EINER KAMERA UND EINES LIDARSENSORS MIT EINER KALIBRIERTAFEL SOWIE EIN POSITIONSKALIBRIERUNGSSYSTEM**

METHOD FOR CALIBRATING THE POSITION OF A CAMERA AND A LIDAR SENSOR WITH A CALIBRATION PANEL AND A POSITION CALIBRATION SYSTEM

PROCÉDÉ D'ÉTALONNAGE DE POSITION D'UNE CAMÉRA ET D'UN CAPTEUR LIDAR DOTÉ D'UN PANNEAU D'ÉTALONNAGE ET SYSTÈME D'ÉTALONNAGE DE POSITION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **21.10.2022 DE 102022127858**

(43) Veröffentlichungstag der Anmeldung:
**24.04.2024 Patentblatt 2024/17**

(73) Patentinhaber: **SICK AG**
**79183 Waldkirch (DE)**

(72) Erfinder:
• **LEHNING, Michael**
**31137 Hildesheim (DE)**

• **HONAL, Matthias**
**79299 Wittnau (DE)**
• **ENGESSER, Raphael**
**79280 Au (DE)**
• **AIPLE, Manuel**
**79211 Denzlingen (DE)**

(74) Vertreter: **Manitz Finsterwald**
**Patent- und Rechtsanwaltspartnerschaft mbB**
**Martin-Greif-Straße 1**
**80336 München (DE)**

(56) Entgegenhaltungen:
CN-A- 110 766 758        CN-B- 110 766 758
US-A1- 2015 352 859      US-A1- 2020 174 107
US-A1- 2021 316 669

## Beschreibung

Die Erfindung betrifft ein Verfahren zur Positionskalibrierung einer Kamera und eines Lidarsensors mit einer Kalibriertafel, sowie ein Positionskalibrierungssystem zur Positionskalibrierung der Kamera und des Lidarsensors.

Unter anderem werden in autonom fahrenden Fahrzeugen zur Hinderniserkennung verschiedene Arten von Hinderniserkennungssystemen eingesetzt. So werden beispielsweise Videokameras und Lidarsensoren verwendet, um Hindernisse detektieren zu können. Die Bilder, die die Hinderniserkennungssysteme erzeugen, werden vorzugsweise gemeinsam ausgewertet. Dabei ist es wichtig zu wissen, wo sich ein erkanntes Hindernis auf einem Bild, welches von einem Hinderniserkennungssystem aufgenommen wurde, in einem anderen Bild, welches von dem anderen Hinderniserkennungssystem aufgenommen wurde, befindet. Die Ergebnisse der Hinderniserkennungssysteme sollen fusioniert werden können. Problematisch sind allerdings mechanische Toleranzen beim Einbau der Hinderniserkennungssysteme, wie dies bei der Montage eines Fahrzeugs der Fall ist. Ein kleiner Fehler in der Ausrichtung des Lidarsensors bewirkt eine große Abweichung in einer Entfernung von bereits 50 m. Ein detektiertes Hindernis im Bild des Lidarsensors befindet sich plötzlich an einer ganz anderen Stelle. Eine detektierte Kollision ist plötzlich keine mehr und aus einem Hindernis, welches außerhalb der Fahrbahn detektiert wurde kann plötzlich eine gefährliche Situation entstehen.

Die CN 110 766 758 B beschreibt den Einsatz einer normalen Kamera und eines Tiefensensors in Kombination. Weiterhin ist eine Kalibriertafel gezeigt, die bekannte Muster, wie z.B. ARUCO-Codes, umfasst, die durch die Kamera erfasst werden und Bereiche höherer Reflektivität, die durch den Tiefensensor erfasst werden. Anhand der erstellten Bilder werden die Kalibrationsparameter zwischen der Kamera und dem Tiefensensor ermittelt.

Die US 2020/174107 A1 umfasst ein Verfahren zur Erfassung von Bilddaten von Kalibrierungsobjekten in der Umgebung durch eine Vielzahl von Bildsensoren. Weiterhin wird eine dreidimensionale LiDAR-Punktwolke basierend auf LiDAR-Daten durch einen LiDAR-Sensor erfasst. Anschließend wird eine dreidimensionale Bildpunktwolke basierend auf den Bilddaten und der dreidimensionalen LiDAR-Punktwolke generiert.

Die US 2021/316669 A1 beschreibt ein polyedrisches Kalibrierungsziel für Fahrzeuge, das zur Kalibrierung mehrerer Sensortypen wie Kameras und LIDAR verwendet wird. Dabei werden während der Kalibrierung visuelle und Entfernungsmessungen eines polyedrischen Ziels erfasst, um die Sensoren durch Zuordnung von erkannten Punkten und Oberflächen zu kalibrieren.

Die US 2015/352859 A1 beschreibt ein zweidimensionales (2D) Scansystem, das einen schnell rotierenden Raster-Polygonspiegel verwendet, um gerade Scanlinien auf einer Bildfläche zu erzeugen. Um Verzerrungen zu minimieren, werden der Einfallswinkel des Laserstrahls auf den Raster-Polygonspiegel sowie der Neigungswinkel der Rotationsachse des Spiegels optimiert. Das System nutzt speziell konfigurierte Scanoptiken, die eine Verzerrung erzeugen, um die durch den Polygonspiegel verursachte Verzerrung auszugleichen. Dadurch kann das System mit einem einzigen rotierenden Element verzerrungsfreie zweidimensionale Scans erzeugen, was für Anwendungen wie Laser-Phosphor-Displays oder Laserdrucker nützlich ist.

Aus Chai, Z., Sun, Y., und Xiong, Z. (2018). "A novel method for lidar camera calibration by plane fitting." 2018 IEEE/ASME International Conference on Advanced Intelligent Mechatronics (AIM), IEEE, 286-291 ist bekannt, dass ein dreidimensionaler Kalibrierungswürfel verwendet wird. Aus Sicht des Lidarsensors werden dann bis zu drei orthogonal zueinander stehende Flächen im 3D-Raum bestimmt. Hieraus kann die Gesamtlage des Würfels im 3D-Raum ermittelt werden. Jede Teilfläche ist mit einem Marker-Code versehen, sodass hier durch Rückprojektion auf die Lage des Codes aus Sicht der Kamera im 3D geschlossen werden kann. Über diese getrennt bestimmten Werte wird dann abschließend die Registrierung zwischen 3D-Raum aus Sicht des Lidarsensors und dem 3D-Raum aus Sicht der Kamera bestimmt.

Nachteilig an diesem Verfahren ist, dass die Kamera bereits kalibriert sein muss. Zudem ist der Kalibrierungswürfel groß und unhandlich, was die Anwendung in der Praxis erschwert.

Es ist daher die Aufgabe der hier vorliegenden Erfindung ein Verfahren zur Positionskalibrierung einer Kamera und eines Lidarsensors zu schaffen, welches besonders effizient ausgeführt werden kann.

Die Aufgabe wird durch das Verfahren zur Positionskalibrierung einer Kamera und eines Lidarsensors mit einer Kalibriertafel gemäß dem unabhängigen Anspruch 1, sowie durch das Positionskalibrierungssystem gemäß dem Anspruch 13 gelöst. Die Ansprüche 2 bis 12 beschreiben vorteilhafte Weiterbildungen des Verfahrens und der Anspruch 14 beschreibt ein autonom fahrendes Fahrzeug, welches eine positionskalibrierte Kamera nebst Lidarsensor umfasst.

Nachfolgend wird das erfindungsgemäße Verfahren zur Positionskalibrierung einer Kamera und eines Lidarsensors mit einer Kalibriertafel beschrieben. Die Kalibriertafel umfasst bekannte Muster. Diese bekannten Muster weisen eine unterschiedliche Helligkeit auf. Vorzugsweise umfasst das bekannte Muster die Farben schwarz und weiß. Weiterhin sind zusätzliche Reflektionsbereiche auf der Kalibriertafel aufgebracht, die eine höhere Reflektivität aufweisen als die bekannten Muster unterschiedlicher Helligkeit. Unter Reflektivität ist das Verhältnis zwischen reflektierter und einfallender Intensität als Energiegröße, zum Beispiel bei elektromagnetischen Wellen (Lichtstrom) zu verstehen.

In einem ersten Verfahrensschritt wird zumindest ein Bild von der Kalibriertafel mit der Kamera aufgenommen. Dabei wird die Pose der Kalibriertafel relativ zur Kamera anhand der bekannten Muster unterschiedlicher Helligkeit ermittelt. Unter dem Begriff "Pose" wird die Position und Orientierung der Kalibriertafel, insbesondere im Kamerakoordinatensystem verstanden.

In einem zweiten Verfahrensschritt wird ein Laserlicht vom Lidarsensor auf die Kalibriertafel ausgesendet. Insbesondere ist darunter zu verstehen, dass das Laserlicht vom Lidarsensor nicht nur auf die Kalibriertafel, sondern auch noch auf die die Kalibriertafel umgebenden Bereiche ausgesendet wird.

In einem dritten Verfahrensschritt wird zumindest ein Bild mit dem Lidarsensor aufgenommen und die Bereiche mit hoher Reflektivität anhand von Intensitätswerten des von der Kalibriertafel zurückgestrahlten Laserlichts ermittelt.

In einem vierten Verfahrensschritt wird die Pose der Kalibriertafel relativ zum Lidarsensor anhand der bekannten Reflektionsbereiche und den ermittelten Bereichen mit hoher Reflektivität ermittelt.

Grundsätzlich können das Bild mit der Kamera und das Bild mit dem Lidarsensor parallel aufgenommen werden. Die Verfahrensschritte stellen daher keine zwingende zeitliche Abfolge dar. Selbstverständlich muss das Laserlicht vom Lidarsensor zuerst ausgesendet werden, bevor die Pose der Kalibriertafel relativ zum Lidarsensor ermittelt werden kann. Die Ermittlung der Pose der Kalibriertafel relativ zur Kamera kann allerdings parallel dazu erfolgen.

Im Anschluss daran können in einer ersten Alternative beide Bilder anhand der ermittelten Posen in ein gemeinsames Koordinatensystem (GKS) umgerechnet werden. In diesem Fall werden die Bilder, die von der Kamera und vom Lidarsensor aufgenommen wurden, in ein gemeinsames Koordinatensystem (GKS) umgerechnet.

In einer zweiten Alternative wird ein Bild, welches von einem Sensor aufgenommen wurde, anhand der ermittelten Posen in das Koordinatensystem des anderen Bildes, welches vom anderen Sensor aufgenommen wurde, umgerechnet. So kann das Bild, welches von der Kamera aufgenommen wurde, in das Koordinatensystem des Bildes umgerechnet werden, welches vom Lidarsensor aufgenommen wurde. In diesem Fall findet eine Transformation vom Kamerakoordinatensystem (KKS) in das Lidarkoordinatensystem (LKS) statt. Umgekehrt kann natürlich auch das Bild, welches von dem Lidarsensor aufgenommen wurde, in das Koordinatensystem des Bildes umgerechnet werden, welches von der Kamera aufgenommen wurde. In diesem Fall findet eine Transformation vom Lidarkoordinatensystem (LKS) in das Kamerakoordinatensystem (KKS) statt.

In einer dritten Alternative werden Umrechnungswerte anhand der ermittelten Posen ermittelt, um zukünftige Bilder in ein gemeinsames Koordinatensystem (GKS) umzurechnen, oder um ein zukünftiges Bild von einem Sensor in das Koordinatensystem des anderen Bildes und damit des anderen Sensors umzurechnen. So kann anhand von Umrechnungswerten ein zukünftiges Bild der Kamera vom Kamerakoordinatensystem (KKS) in das Lidarkoordinatensystem (LKS) umgerechnet werden. Alternativ dazu kann anhand von Umrechnungswerten ein zukünftiges Bild des Lidarsensors vom Lidarkoordinatensystem (LKS) in das Kamerakoordinatensystem (KKS) umgerechnet werden.

Es ist besonders vorteilhaft, dass eine einzige Kalibriertafel verwendet werden kann, die zur Ermittlung der Posen der Kalibriertafel relativ zur Kamera und relativ zum Lidarsensor dient. Damit ist es dann möglich Bilder, die von der Kamera und/oder dem Lidarsensor aufgenommen werden, in das jeweils andere Koordinatensystem umzurechnen. Wird ein Objekt in einem Bild der Kamera erkannt, so kann unmittelbar gesagt werden, an welcher Position im Bild des Lidarsensors sich dieses Objekt befinden muss. Nichts anderes gilt auch für ein Objekt im Bild des Lidarsensors. Es kann unmittelbar gesagt werden, an welcher Position im Bild der Kamera sich dieses Objekt befinden muss.

Es versteht sich, dass die Kalibriertafel auch lediglich eine bemalte Wand umfassen kann. Die Kalibriertafel ist daher nicht zwingend ein separates Gebilde, welches im Raum aufgestellt oder an einer Wand aufgehängt wird.

Weitere Vorteile gegenüber den aus dem Stand der Technik bekannten Ansätzen sind die erhöhte Robustheit und der geringe Zeitaufwand bei der Kalibrierung, wie diese für industrielle Anwendungen benötigt wird. Dadurch, dass zusätzliche Reflektionsbereiche auf der Kalibriertafel aufgebracht sind, können sehr charakteristische Intensitätsmerkmale in dem Bild, also in den Lidardaten des Lidarsensors verwendet werden, um die Kalibriertafel zu erkennen. Daraus folgt, dass die Kalibriertafel in nahezu beliebigen Umgebungen zuverlässig erkannt wird. Bei den im Stand der Technik beschriebenen rein geometrischen Merkmalen kann es in beliebigen Umgebungen hingegen ohne das Einbringen von Vorwissen leicht zu Fehldetektionen bei der Positionskalibrierung kommen.

Weiterhin ist eine einfachere Ausrichtung des Lidarsensors in der Umgebung möglich. Auch eine Fehlerdiagnose in dem Bild des Lidarsensors, also in den LidarDaten, ist einfacher möglich. So kann leichter gesagt werden, weshalb die Daten an einer bestimmten Stelle nicht so aussehen wie erwartet.

Weiterhin werden umfangreiche Objektinformationen zur Verfügung gestellt. Aus den fusionierten Daten (umgerechnete Bilder der verschiedenen Sensoren) kann die Position im Raum von Objekten bestimmt werden. Aus den Bildern der Kamera können mit Hilfe von Objekterkennung oder Code- und Schriftlesung zusätzlich noch weitere Eigenschaften ermittelt werden. Beispielsweise kann so unterschieden werden, ob das Objekt im Bild eine Person ist oder keine Person. Eine eindeutige Identifikation über einen QR-Code ist ebenfalls möglich. Dies könnte zu effizienteren Antikollisionslösungen führen, z.B. muss eine Person langsamer und vorsichtiger umfahren werden als eine Palette. Ergänzend oder alternativ kann eine Dokumentation bei Palletierungsaufgaben durchgeführt werden, indem z.B. ein vom einem fahrerlosen Transportfahrzeug verladenes Gut gleichzeitig identifiziert wird. Weiterhin ist eine Verbesserung der Objektdetektion bei Antikollisionslösungen erzielbar. In dem Bild des Lidarsensors, also in den Lidar-Daten, könnte ein kleines Objekt, z.B. eine Gabelzinke eines Staplers, nur durch einen oder wenige Punkte detektiert werden. Mit Hilfe der Bilder der Kamera, also den Kameradaten, könnte dann erschlossen werden, ob es sich hierbei um eine Störung handelt, oder aber um ein relevantes Objekt, für das Kollisionsgefahr droht.

In einer Weiterbildung des Verfahrens zur Positionskalibrierung sind die Kamera und der Lidarsensor ortsfest zueinander angeordnet. Dies bedeutet, dass der Abstand und die Ausrichtung zwischen Kamera und Lidarsensor gleich, also konstant bleibt. Dennoch ist es möglich, dass Kamera und Lidarsensor gemeinsam bewegt werden. So können diese beispielsweise gemeinsam auf einem Fahrzeug befestigt werden, welches zum Beispiel autonom bewegt wird. Der Abstand und die Ausrichtung der Kamera und des Lidarsensors zueinander entspricht dann dem Abstand und der Ausrichtung zwischen Kamera und Lidarsensor im späteren Betrieb.

In einer Weiterbildung des Verfahrens zur Positionskalibrierung nehmen die Kamera und der Lidarsensor das jeweilige Bild simultan auf. Dies bedeutet, dass dieselbe Szene aufgenommen wird. Ein zeitlicher Versatz zwischen der Aufnahme der verschiedenen Bilder ist dabei bevorzugt kleiner als 1 Sekunde, 500 ms, 200 ms, 100 ms, 50 ms, 20 ms, 10 ms oder kleiner als 1 ms. Um einem minimalen zeitlichen Versatz erreichen zu können, kann es vorgesehen sein, dass das jeweilige Bild der Kamera und des Lidarsensors einen Zeitstempel aufweisen, wobei anhand von Zeitinformationen des Zeitstempels gesagt werden kann, welche Bilder von Lidarsensor und Kamera "simultan" aufgenommen worden sind. Ein möglichst kleiner zeitlicher Versatz wird erreicht, indem lokale Zeitgeber von Lidarsensor und Kamera mit einem externen Zeitgeber synchronisiert werden oder indem das Zeitsignal eines externen Zeitgebers direkt dem Lidarsensor und der Kamera zu Verfügung gestellt wird. Durch Sortierung der Bilder des Lidarsensors und der Kamera anhand ihrer Zeitstempel, kann dann ein möglichst kleiner zeitlicher Versatz erreicht werden.

In einer Weiterbildung des Verfahrens zur Positionskalibrierung umfassen die zusätzlichen Reflektionsbereiche Reflektionsstreifen. Diese sind vorzugsweise auf die Kalibriertafel aufgeklebt.

In einer Weiterbildung des Verfahrens zur Positionskalibrierung sind die zusätzlichen Reflektionsbereiche, also insbesondere in Form der Reflektionsstreifen, winkelig zueinander ausgerichtet. Die Reflektionsbereiche sind insbesondere deshalb nicht alle parallel zueinander ausgerichtet, weil sonst keine eindeutige Identifizierung der Pose zwischen Kalibriertafel und Lidarsensor mittels Laserlinien möglich sein kann, die der Lidarsensor in Form des Laserlichts aussendet.

In einer Weiterbildung des Verfahrens zur Positionskalibrierung umfassen die bekannten Muster ChArUco-Muster. Mit solchen Mustern kann sowohl eine intrinsische Kalibrierung, wie beispielsweise eine Schätzung und Korrektur der Linsenverzerrung, Brennweite und/oder Brennpunkt der Kamera als auch eine extrinsische Kalibrierung, wie beispielsweise die Bestimmung der Pose der Kalibriertafel im Kamerakoordinatensystem erfolgen. Dieses Verfahren wurde beispielweise durch Garrido-Jurado, S., Mu-Salinas, R., Madrid-Cuevas, F., und Mar Jim z, M. (2014). "Automatic generation and detection of highly reliable fiducial markers under occlusion." Pattern Recogn. 47, 6 (June 2014), 2280-2292 beschrieben. Hierzu kann die open source Bibliothek "opencv cameria calibration (2022)" verwendet werden. Opencv camera calibration (2022). "Camera calibration with opencv, <https://docs.opencv.org/4.x/d4/d94/tutorial_camera_calibration.html>.

Die intrinsische Kamerakalibration wird insbesondere direkt aus den Aufnahmen der Kamera ermittelt. Dies erleichtert den Einsatz in der Praxis deutlich, da die Kamera nicht zuvor kalibriert werden muss. Somit können z.B. einfach Kameras anderer Hersteller in den Prozess eingebracht werden. Eine Kamerakalibration, die im Vorfeld durchgeführt werden muss, besitzt immer die Gefahr, dass sich im Zeitraum zwischen intrinsischer Kalibration der Kamera und Registrierung des Lidarsensors gegen die Kamera die optischen Eigenschaften des Kamerasystems verändert haben (z.B. durch Erschütterung, Fokusverstellung und thermische Ausdehnung). Da die Kalibriertafel, im Vergleich zu der Größe typischer Messräume klein ist, könnte die Kalibriertafel auch dauerhaft im Messraum verbleiben, um so regelmäßig die Messparameter durch erneute Aufnahme der Kalibriertafel durch Lidarsensor und Kamera zu überprüfen (Qualitätssicherung).

Es ist besonders vorteilhaft, dass eine einzige Kalibriertafel zur Bestimmung aller Kalibrierschritte verwendet wird (Kamera: intrinsisch und extrinsisch, Lidarsensor: extrinsisch). Dadurch wird direkt über die Kalibriertafel ein unmittelbarer Bezug zwischen den laserbezogenen Messbereichen (Reflektionsbereiche) und den kamerabezogenen Messbereichen (ChArUco-Muster) hergestellt. Dies erhöht die Robustheit des Verfahrens und vermeidet Einrichtfehler gegenüber anderen Verfahren, bei denen intrinsische und extrinsische Kalibration separat erfolgen. Schließlich ist der räumlich kompakte Aufbau der Kalibriertafel geeignet, um diese in industriellen Umgebungen zu verwenden, wo der verfügbare Platz eingeschränkt sein kann oder manche Bereiche nur schwer zugänglich sind, so dass ein Aufbau komplexer Kalibriervorrichtungen nicht möglich wäre.

In einer Weiterbildung des Verfahrens zur Positionskalibrierung findet in einem Verfahrensschritt eine Lokalisierung der bekannten Muster auf der Kalibriertafel statt. In einem weiteren Verfahrensschritt werden die intrinsischen Parameter der Kamera, insbesondere Brennweite, Brennpunkt und/oder Linsenverzerrung anhand der bekannten Muster bestimmt. Im Anschluss daran erfolgt eine Kalibrierung der Kamera mittels der intrinsischen Parameter. Die Kamera muss daher nicht bereits kalibriert sein. Dies erleichtert den Einsatz in der Praxis ungemein.

In einer Weiterbildung des Verfahrens zur Positionskalibrierung werden eine Vielzahl von Bildern verwendet, um die intrinsischen Parameter der Kamera zu bestimmen. Dabei werden diejenigen Bilder verworfen, bei denen der Projektionsfehler einen Schwellenwert überschreitet. Zur Ermittlung der intrinsischen Parameter nimmt die Kamera Bilder von derselben Szene auf. Die relative Position zwischen Kamera und Kalibriertafel ist vorzugsweise unverändert. Dennoch ist es auch denkbar, dass sich die Position bzw. Ausrichtung der Kalibriertafel und/oder der Kamera bei zumindest zwei der Bilder oder bei allen Bildern verändert hat. Vorzugsweise wird auch eine bestimmte Anzahl von Bildern mit der Kamera aufgenommen, wobei diese Anzahl über einen weiteren Schwellwert liegt. Weiter vorzugsweise werden zumindest 2, 3, 6, 8, 12, 16, 20 oder mehr als 25 Bilder verwendet.

In einer Weiterbildung des Verfahrens zur Positionskalibrierung wird die Kalibriertafel derart platziert, dass sie vollständig im Bild der Kamera liegt und dass sie von einer Vielzahl von Laserlinien, also Scan-Linien des Lidarsensors gekreuzt wird. Grundsätzlich wäre es denkbar, dass das Verfahren nicht auf einen Lidarsensor beschränkt ist, der eine bestimmte Anzahl von Laserlinien, wie beispielsweise 4, erzeugt. Es erlaubt somit auch den Einsatz von Lidarsensoren mit diversen Punkteverteilungscharakteristiken, wie beispielsweise Ein-Ebenen-Lidarsensoren, oder Lidarsensoren mit Pseudo-Random-Punkteverteilungen.

Erfindungsgemäß erzeugt der Lidarsensor mehr als 2, 3, 4 oder mehr als 5 Laserlinien. Diese Laserlinien verlaufen vorzugsweise parallel zueinander und werden weiter vorzugsweise gleichzeitig erzeugt. Dadurch ist eine sehr genaue Ermittlung der Pose, also der Position und Ausrichtung der Kalibriertafel zum Lidarsensor möglich, weil unterschiedliche Laserlinien unterschiedliche Reflektionsbereiche kreuzen. Insbesondere für den Fall, dass die Reflektionsbereiche winkelig zueinander ausgerichtet sind, kann sehr genau die die Pose der Kalibriertafel relativ zum Lidarsensor ermittelt werden.

Erfindungsgemäß wird eine Krümmung der Laserlinien durch eine bekannte Abweichung von einer geraden Laserlinie kompensiert. Die Laserlinie, die der Lidarsensor auf die Kalibriertafel projiziert, ist streng genommen keine gerade Linie, sondern eine flachgekrümmte Hyperbel. Die Abweichung von einer geraden Linie ist nicht allzu groß, aber dennoch ist es möglich, die Krümmung der Hyperbel zu berücksichtigen. Dies gelingt erfindungsgemäß, indem die Abweichung von einer geraden Laserlinie einer Look-Up-Tabelle entnommen werden kann. Die Look-Up-Tabelle wird für jede Laserlinie einmalig berechnet und gespeichert.

In einer Weiterbildung des Verfahrens zur Positionskalibrierung wird in einem Verfahrensschritt ermittelt, welche Abschnitte der zurückgestrahlten Laserlinien einen Intensitätsverlauf haben, der oberhalb eines Schwellwerts liegt und welche Abschnitte der zurückgestrahlten Laserlinien in einer Ebene liegen. Abschnitte oberhalb des Schwellwerts sind Bereiche mit hoher Reflektivität. So wird eine Binarisierung des Intensitätsverlaufs durchgeführt. Es liegen alle zusätzlichen Reflektionsbereiche auf der Kalibriertafel in einer Ebene. Ein solches Bild muss sich auch bei den zurückgestrahlten Laserlinien ergeben. Für die zurückgestrahlten Laserlinien werden Punkte im Raum ermittelt (z.B. X, Y, Z) und für jeden Punkt wird noch ein entsprechender Intensitätswert ermittelt. Weiterhin ist die Reflektivität der zusätzlichen Reflektionsbereiche höher als die Umgebung. In einem weiteren Verfahrensschritt werden die so ermittelten Abschnitte gegenüber den bekannten zusätzlichen Reflektionsbereichen abgeglichen. Es ist bekannt, oder es wurde aus dem zumindest einen Bild der Kamera ermittelt, wo sich die zusätzlichen Reflektionsbereiche auf der Kalibriertafel befinden. Dadurch kann die Kalibriertafel im Bild des Lidarsensors entdeckt werden.

In einer Weiterbildung des Verfahrens zur Positionskalibrierung findet das Abgleichen dadurch statt, dass eine Verschiebung und ein Rotationswinkels der ermittelten Abschnitte relativ zum Ursprung der Kalibriertafel ermittelt wird, um so die Pose der Kalibriertafel relativ zum Lidarsensor zu ermitteln. So können beispielsweise die zurückgestrahlten Laserlinien in der Ebene verschoben werden, bis die Bereiche der zurückgestrahlten Laserlinien, deren Intensitätswerte über einem Schwellwert liegen, zu den Bereichen auf der Kalibriertafel korrespondieren, an denen die zusätzlichen Reflektionsbereiche angeordnet sind. Dies kann über ein iteratives Verfahren erfolgen, bei welchem auch eine Drehung der zurückgestrahlten Laserlinien stattfindet.

In einer Weiterbildung des Verfahrens zur Positionskalibrierung könnten auch Daten von zumindest einem Radarsensor miteinbezogen werden. In diesem Fall könnte die Kalibriertafel auch Radarreflektoren umfassen. Diese Radarreflektoren können aktive oder passive Radarreflektoren sein.

In einer Weiterbildung des Verfahrens zur Positionskalibrierung werden vorzugsweise mehrere Bilder von der Kamera und/oder von dem Lidarsensor erstellt. Bevorzugt sind die Kamera und der Lidarsensor ortsfest angeordnet. Die Position und die Ausrichtung zwischen Kamera und Lidarsensor ist auch fest und wird nicht verändert. Dann kann die Kalibriertafel bewegt werden, während verschiedene Bilder durch die Kamera und den Lidarsensor aufgenommen werden. Alternativ kann die Kalibriertafel ortsfest angeordnet sein. In diesem Fall kann sich ein Verbund aus Kamera und Lidarsensor bewegen, wobei die Position und die Ausrichtung zwischen Kamera und Lidarsensor unverändert bleibt. Dadurch unterscheidet sich die Ausrichtung zwischen Kalibriertafel und Kamera / Lidarsensor in den einzelnen Bildern.

In einer Weiterbildung des Verfahrens zur Positionskalibrierung können weitere Testkalibriertafeln aufgestellt werden. Durch diese Testkalibriertafeln kann die Positionskalibrierung überprüft werden.

In einer Weiterbildung des Verfahrens zur Positionskalibrierung kann der Lidarsensor ein Azimut-Erfassungsfeld von mehr als 120°, 180° oder mehr als 240° umfassen. Das Azimut-Erfassungsfeld kann auch 360° betragen. Weiterhin werden zumindest eine weitere Kamera und zumindest eine weitere Kalibriertafel verwendet. Es könnten auch mehr als eine zusätzliche Kamera verwendet werden. In diesem Fall könnten dadurch alle Kameras gegen den Lidarsensor abgeglichen werden. Das Verfahren würde es dann erlauben alle Bilder anhand der ermittelten Posen in ein gemeinsames Koordinatensystem umzurechnen. Es wäre auch denkbar, dass die Bilder von zumindest zwei aber nicht allen Sensoren in das Koordinatensystem des verbleibenden Sensors (z.B. den Lidarsensor) umgerechnet werden würden. Grundsätzlich wäre es auch möglich, dass in diesem Fall ebenfalls Umrechnungswerte ermittelt werden könnten, um zukünftige Bilder in ein gemeinsames Koordinatensystem umzurechnen. Auch wäre es möglich, dass Umrechnungswerte ermittelt werden könnten, um ein zukünftiges Bild in das Koordinatensystem eines anderen zukünftigen Bildes eines anderen Sensors umzurechnen.

In einer Weiterbildung des Verfahrens zur Positionskalibrierung könnte die Pose der Kalibriertafel relativ zum Lidarsensor auch durch zusätzliches Vorwissen optimiert werden. So kann eine Monte-Carlo-Suche zur Bestimmung der gewünschten Pose verwendet werden. Der Suchraum kann dann aufgrund der im Rahmen der extrinsischen Kamerakalibrierung ermittelten Pose der Kalibriertafel relativ zur Kamera deutlich eingeschränkt werden. Hierbei wird die Annahme zu Grunde gelegt, dass sich Lidarsensor und Kamera nahe beieinander befinden, oder dass ihre Lage zueinander grob bekannt ist. Dies ist aber keine zwingende Einschränkung und reduziert lediglich den Suchaufwand im Parameterraum. Die verbleibenden freien Parameter beschränken sich im Wesentlichen auf den Abweichungswinkel zur Horizontalen der zumindest einen Laserlinie, die die Kalibriertafel überstreicht und auf seine Höhe auf der Kalibriertafel. Als Optimierungskriterium ist dann ein Distanzmaß zu verwenden, wie z.B. die Hamming-Distanz, welches den Abstand zwischen den erfassten Intensitätswerten des zurückgestrahlten Laserlichts, die oberhalb eines Schwellwerts liegen und der mit Hilfe der aktuellen Transformation vorausgesagten Position des zusätzlichen Reflektionsbereiche angibt

In einer Weiterbildung des Verfahrens kann eine Position und/oder der Ausrichtung der Kalibriertafel relativ zu einem Verbund aus Kamera und Lidarsensor verändert werden. Dabei wird bevorzugt die Kalibriertafel um den Verbund aus Kamera und Lidarsensor bewegt. Es könnte aber auch der Verbund aus Kamera und Lidarsensor um die Kalibriertafel bewegt werden. Der Abstand und die Ausrichtung zwischen Kamera und Lidarsensor bleibt unverändert. Dann nehmen Kamera und Lidarsensor erneut Bilder auf und es wird erneut die Pose der Kalibriertafel relativ zur Kamera und zum Lidarsensor ermittelt. Dadurch können z.B. genauere Umrechnungswerte ermittelt werden.

Das erfindungsgemäße Positionskalibrierungssystem umfasst eine Kamera, einen Lidarsensor, eine Kalibriertafel und eine Verarbeitungseinheit. Die Kalibriertafel weist bekannte Muster auf, wobei die bekannten Muster unterschiedliche Helligkeit umfassen. Auf der Kalibriertafel sind zusätzliche Reflektionsbereiche aufgebracht, die eine höhere Reflektivität aufweisen als die bekannten Muster unterschiedlicher Helligkeit. Die Kamera ist dazu ausgebildet, um ein Bild von der Kalibriertafel aufzunehmen wobei die Verarbeitungseinheit dazu ausgebildet ist, um eine Pose der Kalibriertafel relativ zur Kamera anhand der bekannten Muster zu ermitteln. Diese bekannten Muster werden dabei in dem Bild der Kamera erfasst. Der Lidarsensor ist dazu ausgebildet, um ein Laserlicht auf die Kalibriertafel auszusenden, wobei das Laserlicht mehr als zwei, drei, vier oder mehr als fünf Laserlinien umfasst, die beabstandet zueinander angeordnet sind. Der Lidarsensor ist weiterhin dazu ausgebildet, um ein Bild aufzunehmen, wobei die Verarbeitungseinheit dazu ausgebildet ist, um Bereiche mit hoher Reflektivität anhand von Intensitätswerten des von der Kalibriertafel zurückgestrahlten Laserlichts zu ermitteln. Die Verarbeitungseinheit ist dazu ausgebildet, um eine Krümmung der Laserlinien durch eine bekannte Abweichung von einer geraden Linie zu kompensieren, wobei die Abweichung der auf die Kalibriertafel projizierten Laserlinie von einer geraden Laserlinie einer Look-up-Tabelle entnommen wird, die für jede Laserlinie einmalig berechnet und gespeichert wird, und um beide Bilder anhand der ermittelten Posen in ein gemeinsames Koordinatensystem (GKS) umzurechnen. Alternativ ist die Verarbeitungseinheit dazu ausgebildet, um ein Bild anhand der ermittelten Posen in das Koordinatensystem des anderen Bilds umzurechnen alternativ ist die Verarbeitungseinheit dazu ausgebildet, um Umrechnungswerte anhand der ermittelten Posen zu ermitteln, um zukünftige Bilder in ein gemeinsames Koordinatensystem (GKS) umzurechnen oder um ein zukünftiges Bild von einem Sensor (Kamera oder Lidarsensor) in das Koordinatensystem eines anderen zukünftigen Bildes des anderen Sensors (Lidarsensor oder Kamera) umzurechnen. Es kann vorgesehen sein, die Lidardaten in ein 2D-Bildkoordinatensystem zu transformieren. Auch könnte die Position zumindest einiger Bildpunkte im 2D-Bildkoordinatensystem in das 3D-System transformiert werden.

Weiterhin wird noch ein autonom fahrendes Fahrzeug, insbesondere in Form eines Staplers, angegeben. Das autonom fahrende Fahrzeug umfasst eine Kamera, einen Lidarsensor und eine Verarbeitungseinheit. Die Kamera und der Lidarsensor sind gemäß einem der vorherigen Ansprüche zueinander kalibriert und relativ unverschieblich zueinander an dem Fahrzeug angeordnet. Der Lidarsensor ist dazu ausgebildet, um fortlaufend die Fahrbahn, insbesondere vor dem Fahrzeug, auf Hindernisse zu überwachen. Die Verarbeitungseinheit ist dazu ausgebildet, um zumindest ein Objekt in den Daten (Bildern) des Lidarsensors, welches z.B. kleiner als ein Schwellwert ist, mit den Daten der Kamera abzugleichen, um für den Fall, dass von dem Objekt eine Kollisionsgefahr ausgeht, das Fahrzeug abzubremsen und/oder eine Lenkbewegung einzuleiten, um eine Kollision zu vermeiden und/oder eine Warnung auszugeben oder für den Fall, dass von dem Objekt keine Kollisionsgefahr ausgeht keinen Eingriff in die Fahrbewegung des Fahrzeugs vorzunehmen und/oder keine Warnung auszugeben. Die Warnung kann optisch und/oder akustisch und/oder haptisch, z.B. durch Vibrationen erfolgen.

Nachfolgend wird die Erfindung rein beispielhaft unter Bezugnahme auf die Zeichnungen beschrieben. Es zeigen:

| Figur 1: | ein Ausführungsbeispiel mit einer Kamera und einem Lidarsensor, die einen Raumbereich in einer Produktionsumgebung überwachen; |
|---|---|
| Figuren 2, 3, 4: | ein Positionskalibrierungssystem mit der Kamera, dem Lidarsensor und einer Kalibriertafel; |
| Figur 5: | einen Verlauf von Laserlicht, welches von der Kalibriertafel zurückgestrahlt wurde, wobei unterschiedliche Abschnitte des Laserlichts unterschiedliche Intensitätswerte haben; |
| Figur 6: | eine Möglichkeit die beschreibt, wie die Abschnitte aus Figur 5 mit zusätzlichen Reflektionsbereichen auf der Kalibriertafel abgeglichen werden; |
| Figur 7: | ein Bild eines Lidarsensors in dem die Kalibriertafel ausfindig gemacht wird; |
| Figuren 8, 9: | Ausführungsbeispiele, die ausführen, dass die Laserlinie des Lidarsensors keine gerade Linie, sondern eine flachgekrümmte Hyperbel ist; |
| Figuren 10A, 10B, 10C: | Ausführungsbeispiele, die erläutern wie die Pose der Kalibriertafel relativ zum Lidarsensor ermittelt wird; und |
| Figur 11: | ein Flussdiagramm, welches ein Verfahren zur Positionskalibrierung einer Kamera und eines Lidarsensors mit einer Kalibriertafel beschreibt. |

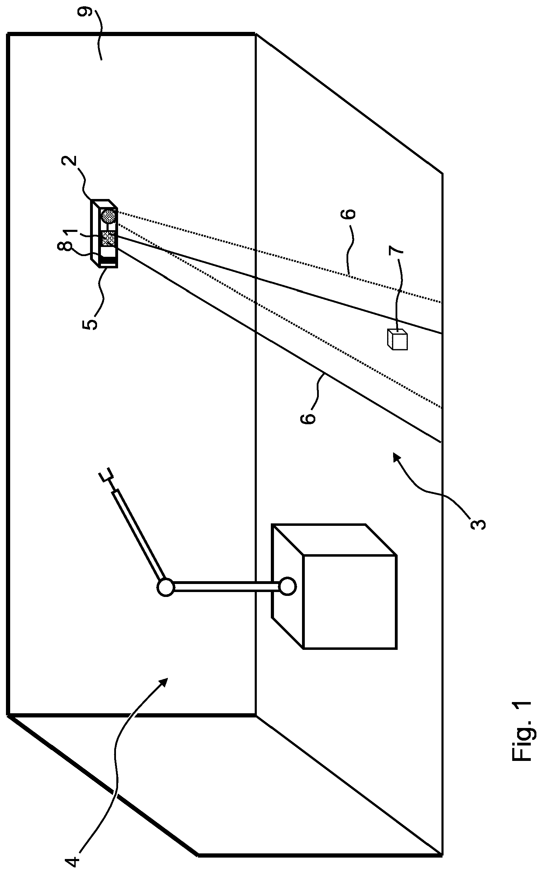

Figur 1 zeigt den Einsatz einer Kamera 1 und eines Lidarsensors 2, die gemeinsam einen Raumbereich 3 einer Produktionsumgebung überwachen. In der Produktionsumgebung ist in diesem Fall ein Roboter 4 dargestellt. Damit Personen nicht versehentlich in den Bewegungsbereich des Roboters 4 geraten, wird der Raumbereich 3, in welchen sich der Roboter 4 befindet, mit der Kamera 1 und dem Lidarsensor 2 überwacht. Die Kamera 1 und der Lidarsensor 2 sind in diesem Ausführungsbeispiel in einem gemeinsamen Gehäuse 5 angeordnet. Sie können allerdings auch in verschiedenen Gehäusen untergebracht sein. Sowohl die Kamera 1 als auch der Lidarsensor 2 haben ein Überwachungsfeld 6. Das Überwachungsfeld 6 der Kamera 1 ist mit einer durchgezogenen Linie dargestellt, wohingegen das Überwachungsfeld 6 des Lidarsensors 2 mit einer gepunkteten Linie dargestellt ist. Beide Überwachungsfelder 6 sind zumindest teilweise überlappend zueinander ausgerichtet. Wie nachher noch erläutert wird, können die Daten der Kamera 1 und die Daten des Lidarsensors 2 fusioniert werden, sodass unmittelbar gesagt werden kann, an welcher Stelle ein detektiertes Objekt 7 in den Daten der Kamera 1 in den Daten des Lidarsensors 2 auftauchen muss und umgekehrt. Dadurch ist eine deutlich effizientere Überwachung des Raumbereichs 3 möglich.

Diese Fusionierung kann mit einer Verarbeitungseinheit 8 erfolgen, die beispielsweise in dem gemeinsamen Gehäuse 5 angeordnet ist. Das gemeinsame Gehäuse 5 ist in diesem Fall an einer Wand 9 angebracht.

Bei der Kamera 1 kann es sich um eine Fotokamera oder eine Videokamera handeln.

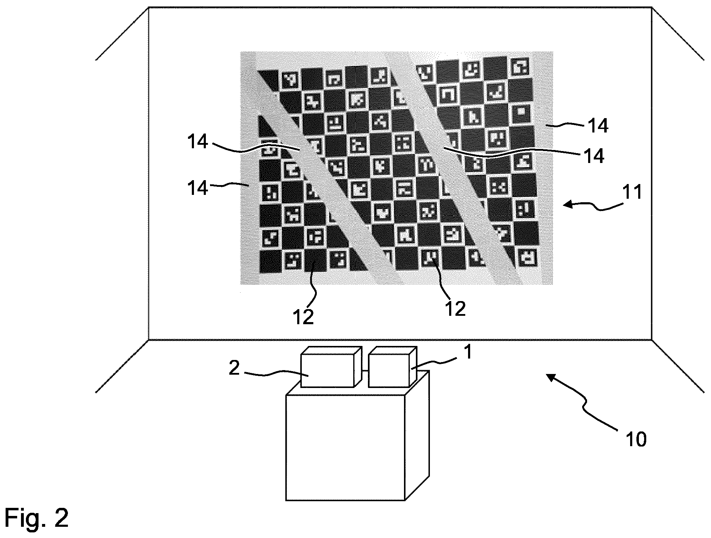

In den Figuren 2, 3, 4 ist ein Positionskalibrierungssystem 10 mit der Kamera 1, dem Lidarsensor 2 und einer Kalibriertafel 11 dargestellt. Die Kalibriertafel 11 umfasst bekannte Muster 12 unterschiedliche Helligkeit. Bei den bekannten Mustern 12 handelt es sich vorzugsweise um ChArUco-Muster. Diese umfassen eine Schachbrettstruktur mit ArUco-Mustern. Die Muster 12 selbst sind bezüglich Größe und Ausrichtung zueinander bekannt.

Die Kamera 1 und der Lidarsensor 2 sind ortsfest, also unverschieblich zueinander angeordnet. Diese Anordnung wird nach der Positionskalibrierung, also bei Einsatz in einem autonom fahrenden Fahrzeug, beibehalten.

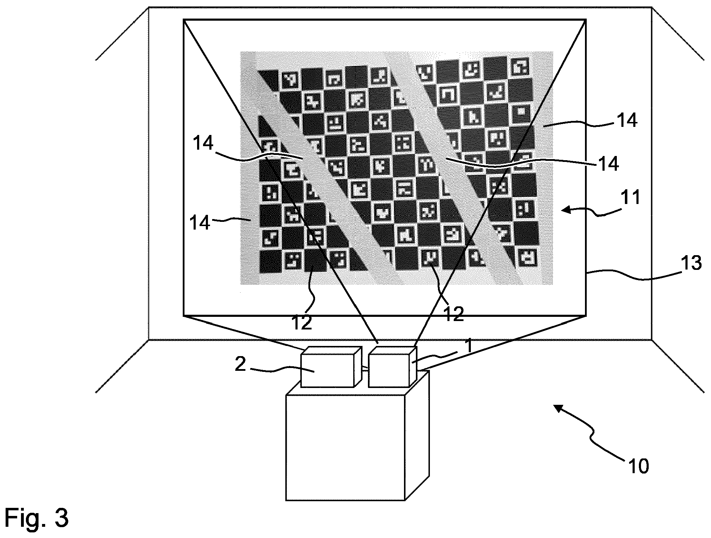

In Figur 3 ist dargestellt, dass die Kamera 1 ein Bild 13 aufnimmt, in dem sich die Kalibriertafel 11 befindet. Über die Verarbeitungseinheit 8 ist es möglich eine Pose der Kalibriertafel 11 relativ zur Kamera 1 zu ermitteln. Dies erfolgt über eine Detektion der bekannten Muster 12. Die Ermittlung der Pose (Position und Orientierung) der Kalibriertafel 11 relativ zur Kamera 1 wird auch als extrinsische Kamerakalibrierung bezeichnet. Weiterhin kann anhand des aufgenommenen Bildes 13 auch eine intrinsische Kamerakalibrierung vorgenommen werden. Dabei werden insbesondere Brennweite, Brennpunkt und/oder Linsenverzerrung ermittelt. Dies funktioniert anhand der detektierten bekannten Muster 12. Die Kamera 1 muss daher nicht bereits vorkalibriert sein.

Bevorzugt wird der Aufbau, bestehend aus Kamera 1 und Lidarsensor 2 um die Kalibriertafel 11 bewegt, sodass mehrere Bilder 13 durch die Kamera 1 aus unterschiedlichen Blickwinkeln auf die Kalibriertafel 11 aufgenommen werden. Selbstverständlich könnte ergänzend oder alternativ dazu auch die Kalibriertafel 11 bewegt werden.

In den Figuren 2, 3 und 4 ist außerdem dargestellt, dass die Kalibriertafel 11 zusätzliche Reflektionsbereiche 14 umfasst, die eine höhere Reflektivität aufweisen als die bekannten Muster 12. Diese zusätzlichen Reflektionsbereiche 14 umfassen insbesondere mehrere Reflektionsstreifen. Die Reflektionsstreifen sind zumindest teilweise winkelig zueinander ausgerichtet. Die bekannten Muster 12 können teilweise durch die zusätzlichen Reflektionsbereiche 14 überdeckt, beispielsweise überklebt sein.

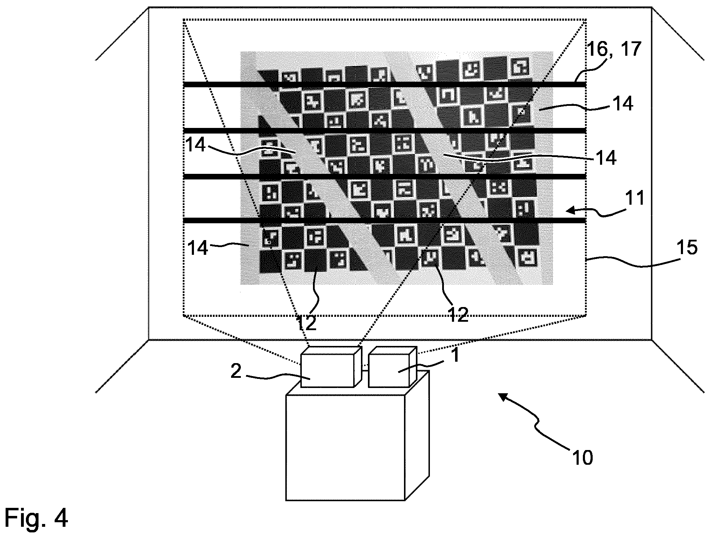

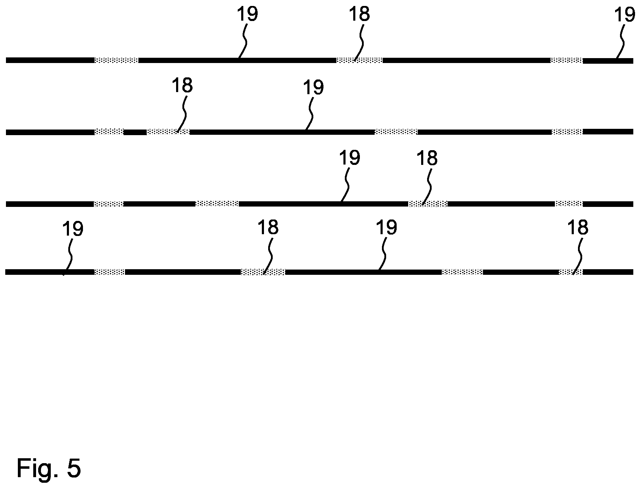

In Figur 4 ist dargestellt, dass der Lidarsensor 2 ein Bild 15 aufnimmt, in dem sich die Kalibriertafel 11 befindet. Dies geschieht durch Aussenden von Laserlicht 16, insbesondere in Form von mehreren Laserlinien 17. Das reflektierte Laserlicht 16 in Form der Laserlinien 17 ist in dem aufgenommenen Bild 15 des Lidarsensors 2 sichtbar. In dem aufgenommenen Bild 15 des Lidarsensors 2 können Bereiche 18 (siehe Figur 5) mit hoher Reflektivität ermittelt werden. Dies erfolgt anhand von Intensitätswerten des von der Kalibriertafel 11 zurückgestrahlten Laserlichts 16. Die Verarbeitungseinheit 8 ist dazu ausgebildet, eine Pose der Kalibriertafel 11 relativ zum Lidarsensor 2 anhand der bekannten Reflektionsbereiche 14 und den ermittelten Bereichen 18 mit hoher Reflektivität zu ermitteln.

Bevorzugt wird der Aufbau, bestehend aus Kamera 1 und Lidarsensor 2 um die Kalibriertafel 11 bewegt, sodass mehrere Bilder 15 durch den Lidarsensor 2 aus unterschiedlichen Blickwinkeln auf die Kalibriertafel 11 aufgenommen werden. Selbstverständlich könnte ergänzend oder alternativ dazu auch die Kalibriertafel 11 bewegt werden.

Die Kamera 1 und der Lidarsensor 2 nehmen vorzugsweise synchron zueinander Bilder 13, 15 von der Kalibriertafel 11 auf.

Vorzugsweise kreuzen mehrere Laserlinien 17 des Lidarsensors 2 die Kalibriertafel 11 und damit die zusätzlichen Reflektionsbereiche 14. Dadurch, dass die zusätzlichen Reflektionsbereiche 14 winkelig zueinander ausgerichtete Reflektionsstreifen umfassen, kann anhand des reflektierten Laserlichts 16 genau ermittelt werden, welcher Teil der Kalibriertafel 11 durch die Laserlinien 17 gekreuzt wurde.

Vorzugsweise sendet der Lidarsensor 2 mehr als zwei, drei, vier oder mehr als fünf Laserlinien 17 aus, die weiter vorzugsweise parallel zueinander angeordnet sind. Die Laserlinien 17 sind vorzugsweise vollständig überlappungsfrei zueinander angeordnet.

Die Verarbeitungseinheit 8 ist weiterhin dazu ausgebildet, um beide Bilder 13, 15 anhand der ermittelten Posen in ein gemeinsames Koordinatensystem (GKS) umzurechnen. In diesem Fall kann ganz genau gesagt werden, wo sich ein Objekt 7 befindet.

Alternativ dazu ist die Verarbeitungseinheit 8 dazu ausgebildet, um ein Bild 13, 15 anhand der ermittelten Posen in das Koordinatensystem des anderen Bildes 15, 13 umzurechnen. Auch dann kann bestimmt werden, in welchem Bereich des anderen Bildes 15, 13 sich das Objekt 7 befinden muss.

Ergänzend oder alternativ ist insbesondere die Verarbeitungseinheit 8 dazu ausgebildet, um anhand der ermittelten Posen Umrechnungswerte zu ermitteln, um mit den Umrechnungswerten zukünftige Bilder 13, 15 in ein gemeinsames Koordinatensystem (GKS) umzurechnen. Mit den Umrechnungswerten kann auch ein zukünftiges Bild 13, 15 in das Koordinatensystem des anderen Bildes 15, 13 umgerechnet werden. Dadurch ist eine Fusionierung beider Bilder 13, 15 effizient möglich, und detektierte Objekte 7 in einem Bild 13, 15 können durch das andere Bild 15, 13 verifiziert werden.

Figur 5 zeigt ein aufgenommenes Bild 15 des Lidarsensors 2. Das Bild 15 beinhaltet das zurückgestrahlte Laserlicht 16 mit den Laserlinien 17, welches der Lidarsensor 2 ausgesendet hat. In dem Bild 15 gibt es Bereiche mit hoher Reflektivität 18, also Bereiche mit hoher Lichtintensität. Diese Bereiche mit hoher Reflektivität 18 kommen dadurch zustande, dass das Laserlicht 16, also die vom Lidarsensor 2 ausgesendeten Laserlinien 17, auf die zusätzlichen Reflektionsbereiche 14 der Kalibriertafel 11 treffen.

Weiterhin sind noch Bereiche mit niedriger Reflektivität 19 dargestellt. In diesen Bereichen ist die Intensität des zurückgestrahlten Laserlichts 16 geringer, als in den Bereichen mit hoher Reflektivität 18. Die vom Lidarsensor 2 ausgesendeten Laserlinien 17 treffen auf Bereiche der Kalibriertafel 11, die eine höhere Lichtleistung absorbieren.

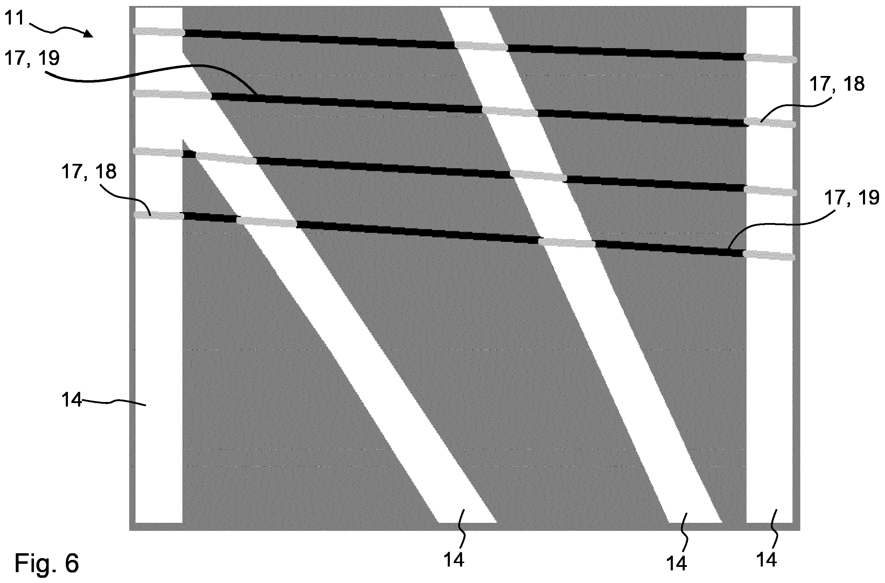

In Figur 6 wird dies anhand eines anderen Ausführungsbeispiels verdeutlicht. Die zusätzlichen Reflektionsbereiche 14 sind auf der Kalibriertafel 11 eingezeichnet. Die bekannten Muster 12 sind in diesem Fall zur besseren Übersichtlichkeit weggelassen worden. Weiterhin ist das reflektierte Laserlicht 16 in Form der Laserlinien 17 dargestellt. Das reflektierte Laserlicht 16 hat einen unterschiedlich starken Intensitätsverlauf, je nachdem auf welche Bereiche der Kalibriertafel das Laserlicht 16 aufgetroffen ist. Bereiche mit hoher Reflektivität 18, also einem hohen Intensitätswert, sind heller dargestellt als Bereiche mit niedriger Reflektivität 19. Die Verarbeitungseinheit 8 kann das Bild 15 des Lidarsensors 2 analysieren um herauszufinden, in welchem Bereich sich die Kalibriertafel 11 befindet und wie die Kalibriertafel 11 relativ zum Lidarsensor 2 ausgerichtet sein muss, damit die erfassten Bereiche mit hoher Reflektivität 18 zu den bekannten zusätzlichen Reflektionsbereiche 14 der Kalibriertafel 11 passen. Dies wird im Folgenden noch genauer erläutert.

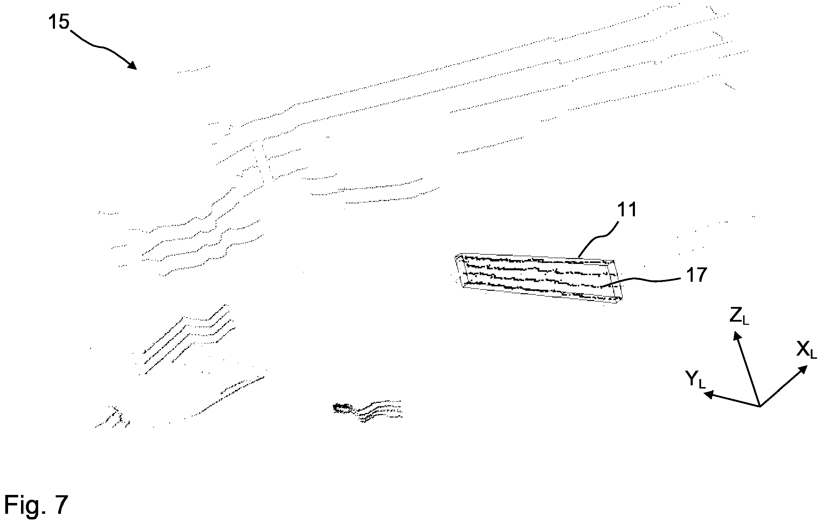

Figur 7 zeigt ein Bild 15 des Lidarsensors 2 in dem die Kalibriertafel 11 ausfindig gemacht wird. Das nachfolgend beschriebene Verfahren soll lediglich ein mögliches Beispiel illustrieren. Die Messdaten des Lidarsensors 2 werden bevorzugt in kartesische Koordinaten transformiert, so dass zu jedem Messpunkt die 3D-Position in Lidarkoordinaten sowie sein Intensitätswert bekannt ist. Das Bild 15 des Lidarsensors 2 umfasst daher eine Vielzahl von Messpunkten. Die Menge aller Messpunkte kann auch als Point-Cloud bezeichnet werden. Die Kalibriertafel 11 wird nun iterativ in der Point-Cloud lokalisiert. Der Messpunkt $P_{max}$ mit dem höchsten Intensitätswert wird gesucht. Es wird untersucht, ob dieser Punkt innerhalb einer Ebene liegt. Die Detektion einer solchen Ebene in der Point-Cloud erfolgt mittels bekannter Verfahren, z.B. durch Segmentierung pcl segmentation (2022) der PointCloudLibrary (PCL) pcl (2022). Ausgehend vom gewählten Messpunkt $P_{max}$ liefert diese Segmentierung alle Messpunkte, die in einer Ebene mit vorgegebenem maximalem Abstand liegen. Liegt der Messpunkt $P_{max}$ in einer ebenen Fläche mit den Dimensionen der Kalibriertafel 11, dann ist die Kalibriertafel gefunden. Andernfalls wird die beschriebene Prozedur mit dem Messpunkt mit dem nächst geringeren Intensitätswert wiederholt. Optional kann der Suchbereich durch Vorgabe eines 3D-Quaders eingeschränkt werden, um Fehler durch Reflexionen oder Artefakte zu vermeiden.

Danach werden die Intensitätswerte, der auf der ebenen Fläche liegenden Messpunkte binarisiert. Die Binarisierung erfolgt anhand eines Intensitätshistogramms. Die Binarisierungsschwelle wird so bestimmt, dass der prozentuale Anteil heller Punkte (Intensitäten oberhalb der Schwelle) mit dem reflektierenden Anteil auf der Kalibriertafel 11 übereinstimmt. Das Verhältnis reflektierender zu nicht-reflektierender Punkte der Kalibriertafel 11 ist bekannt und konstant (Breite der Reflektionsstreifen der zusätzlichen Reflektionsbereiche 14 relativ zur Breite der Kalibriertafel 11). Eine solche Binarisierung der Lidar-Point-Cloud auf der Kalibriertafel ist z.B. in Figur 5 dargestellt.

Die binarisierten Intensitätswerte des reflektierten Laserlichts 16 in Form der Laserlinien 17 werden gegen das Kalibriermuster, also gegen die bekannten zusätzlichen Reflektionsbereiche 14 auf der Kalibriertafel 11 abgeglichen und dadurch die Schnittlinien der Laserlinien 17 auf der Kalibriertafel 11 bestimmt. Dadurch wird die Position und der Rotationswinkel der Laserlinien 17 relativ zum Ursprung der Kalibriertafel 11 festgelegt. Die Bestimmung erfolgt beispielsweise durch Iteration über alle zulässigen Lagen und/oder durch ein Suchverfahren wie z.B. eine Monte-Carlo-Suche. Der iterative Ansatz erfolgt variiert über die Start- und Endpunkte der Schnittlinien und umfasst z.B. die folgenden Möglichkeiten:

a) Zu jeder Schnittlinie wird die Hammingdistanz zwischen den binarisierten Intensitätswerten und den Punkten der binarisierten Referenztafel berechnet. Die binarisierte Referenztafel ist ein verzeichnungsfreies und entzerrtes Muster der Kalibriertafel 11, das nur noch reflektierende (zusätzliche Reflektionsbereiche 14) von nicht-reflektierenden Punkten (übrige Bereiche) unterscheidet.

b) Die Schnittlinie mit der kleinsten Hammingdistanz bestimmt Position und der Rotationswinkel der Laserlinien 17 relativ zum Ursprung der Kalibriertafel 11.

Auch in Figur 6 ist ein Verlauf mit binarisierten Intensitätswerten gezeigt, die auf ein bevorzugt binarisiertes Referenzmuster abgebildet sind. Man erkennt, wie durch Verschieben und Drehen der Laserlinien 17 im Referenzmuster die beste Übereinstimmung ermittelt wurde.

Es wird außerdem angemerkt, dass der Lidarsensor 2 den Raum nicht in einer Ebene scannt, sondern durch einen flachen Kegel. Die Laserlinie 17, die der Lidarsensor 2 auf die Kalibriertafel 11 projiziert, ist daher keine gerade Linie, sondern eine flach gekrümmte Hyperbel.

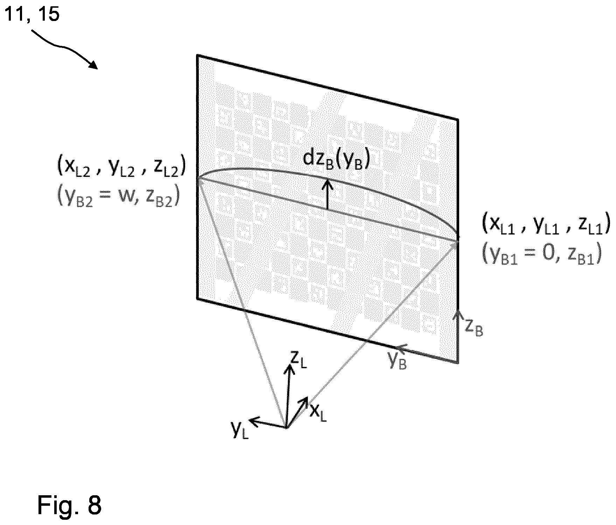

Die hyperbelförmige Projektion der Laserlinie 17 und deren Differenz zur geraden Linie $dz_B(y_B)$ ist in Figur 8 gezeigt. Dabei ist:

- der Laserlinie 17 in 3D-Lidarkoordinaten $L_{scan} = (x_L, y_L, z_L)$ in [Meter],
- deren Projektion auf die 2D-Tafelkoordinaten $L_{proj} = (y_B, z_B)$ in [Meter] und
- der Kegel $x^2_L + y^2_L = R^2 z^2_L$

bei gegebener Breite w der Kalibriertafel 11. Der Parameter R beschreibt parametrisch den Öffnungswinkel des Kegels.

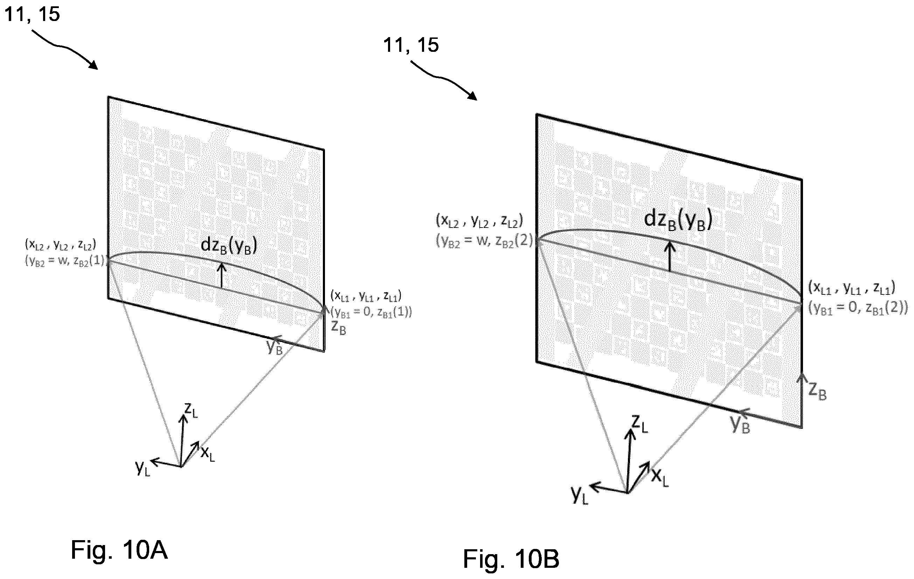

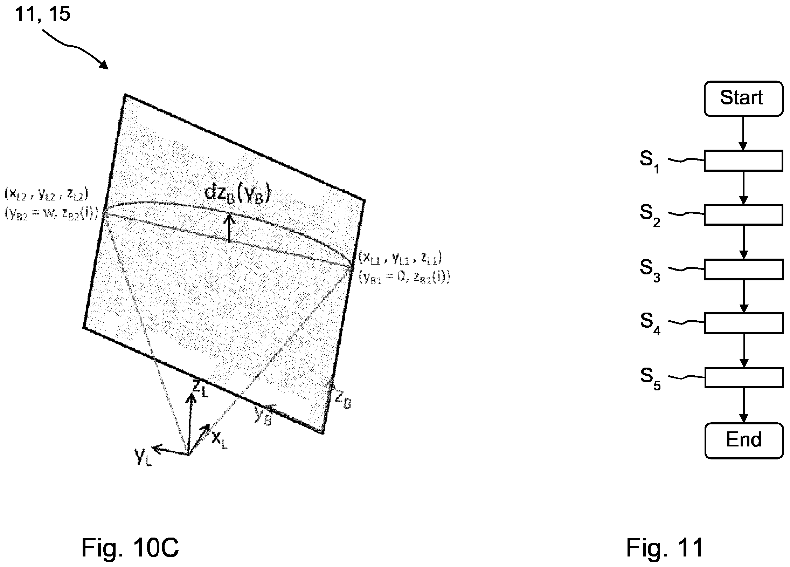

Die Figuren 10A, 10B und 10C zeigen die Iteration über eine gekrümmte Laserlinie durch Verschieben der Start und Endpunkte. Am Ende der Iteration liegen die Bereiche mit hoher Reflektivität 18 des reflektierten Laserlichts 16 in Form der Laserlinien 17 außerschließlich oder zu mehr als 90%, 95% oder zu mehr als 98% über den zusätzlichen Reflektionsbereichen 14.

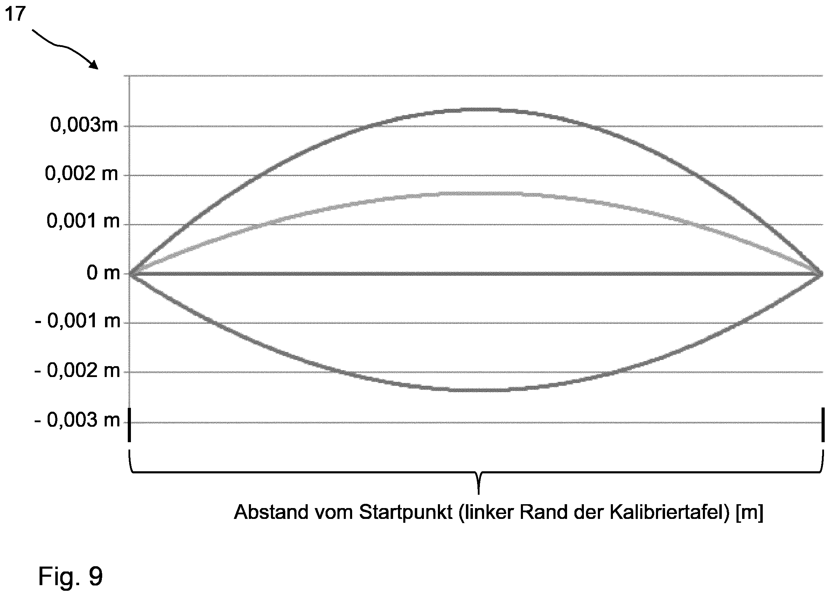

Bevorzugt wird die Krümmung der Hyperbel mitberücksichtigt, indem die Abweichung von der geraden Laserlinie 17 erfindungsgemäß einer Lookup-Tabelle entnommen wird. Die Lookup-Tabelle wird erfindungsgemäß für jede Laserlinie 17 einmalig berechnet und gespeichert. Figur 9 zeigt die Abweichung der Hyperbeln von der geraden Laserlinie 17, die in der Lookup-Tabelle abgelegt wird. Die Breite der Graphik entspricht dabei ungefähr der Breite der Kalibriertafel 11. Die Figur ist in Y-Richtung überhöht dargestellt. Auch wenn die Abweichungen zwischen der Schnitthyperbel und einer angenäherten Schnittgeraden klein sind, erhöht die Berücksichtigung des Hyperbelschnitts die Abbildungsgenauigkeit. In der Lookup-Tabelle wird die Differenz $dz_B(y_B)$ zur geraden Laserlinie 17 für jeden Wert $y_B$ gespeichert. Die Werte $dz_B(y_B)$ können dabei wie folgt berechnet werden:

$$x_L = x_{L1} + \frac{y_{B_{px}}}{w_{px}}\left(x_{L2} - x_{L1}\right) \qquad (1)$$

$$y_L = y_{L1} + \frac{y_{B_{px}}}{w_{px}}\left(y_{L2} - y_{L1}\right) \qquad (2)$$

$$z_{L1} = \frac{1}{R}\sqrt{x_{L1}^2 + y_{L1}^2} \qquad (3)$$

$$z_{L2} = \frac{1}{R}\sqrt{x_{L2}^2 + y_{L2}^2} \qquad (4)$$

$$z_L = \frac{1}{R}\sqrt{x_L^2 + y_L^2} \qquad (5)$$

$$dz_B\left(y_B\right) = z_L - \left(\frac{y_{B_{px}}}{w_{px}}\left(z_{L2} - z_{L1}\right) + z_{L1}\right) \qquad (6)$$

Nun ist folgendes bekannt:

- die Position und Orientierung (Pose) der Kalibriertafel 11 in Kamerakoordinaten;
- die Messpunkte der Laserlinien 17 in Lidarkoordinaten; und
- die Lage der Laserlinien 17 relativ zum Ursprung der Kalibriertafel 11 und damit die Pose der Kalibriertadel 11 relativ zum Lidarsensor 2.

Damit kann für jeden Messpunkt $P_{Lidar}$ in 3D-Lidarkoordinaten, der sich auf der Kalibriertafel befindet, ein korrespondierender Punkt in 3D-Kamerakoordinaten angegeben werden. Es lässt sich eine Transformation $T_{Lidar \rightarrow Board}$ angeben, mit der ein Messpunkt $P_{Lidar} = (X_{Lidar}, y_{Lidar}, Z_{Lidar})$ auf einen Punkt auf der Kalibriertafel 11 $P_{Board} = (y_{Board}, z_{Board})$ (im Tafelbezugssystem) abgebildet werden kann. Da die Pose der Kalibriertafel 11 im Kamerakoordinatensystem ebenso bekannt ist, lässt sich weiterhin eine Transformation $T_{Board \rightarrow Camera}$ berechnen. Damit kann der Punkt $P_{Board} = (y_{Board}, Z_{Board})$ auf einen Messpunkt $P_{Kamera} = (X_{Kamera}, y_{Kamera}, z_{Kamera})$ im Kamerakoordinatensystem abgebildet werden kann. Aus diesen Punktekorrespondenzen kann durch bekannte Verfahren (Least-Mean-Square) eine Transformation $T_{Li\text{-}dar \rightarrow Kamera}$ geschätzt werden, die jeden Messpunkt in Lidarkoordinaten in einen 3D-Punkt in Kamerakoordinaten abbildet (d.h. nicht mehr nur die auf der Kalibriertafel befindlichen Punkte). Die Schätzung der 3D-Transformation kann z.B. wie in opencv pose estimation (siehe opencv pose estimation (2022)) beschrieben erfolgen. Unter Anwendung der ermittelten intrinsischen Kameraparameter können die 3D-Kamerapunkte in 2D-Bildpunkte transformiert werden. Die Ermittlung und Anwendung dieser Transformation $T_{KameraIntrinsic}$ erfolgt beispielsweise durch bekannte Verfahren wie z.B. in opencv projection (siehe opencv projection (2022)). Durch Verkettung der Transformationen $T_{Lidar \rightarrow Kamera}$ und $T_{CameraIntrinsic}$ können nun die Messpunkte der Lidar Point-Cloud in das jeweils aktuelle Bild 13 der Kamera 1 transformiert werden, und es ist die gewünschte Zuordnung von 3D Lidar-Punkten zu 2D Bildpunkten möglich.

Figur 11 zeigt ein Flussdiagramm, welches ein Verfahren zur Positionskalibrierung der Kamera 1 und des Lidarsensors 2 mit der Kalibriertafel 11 beschreibt.

In einem ersten Verfahrensschritt $S_1$ wird zumindest ein Bild 13 von der Kalibriertafel 11 mit der Kamera 1 aufgenommen und eine Pose der Kalibriertafel 11 relativ zur Kamera 1 anhand der bekannten Muster 12 auf der Kalibriertafel 11 ermittelt.

In einem zweiten Verfahrensschritt $S_2$ wird Laserlicht 16, insbesondere in Form von Laserlinien 17, vom Lidarsensor 2 auf die Kalibriertafel 11 gestrahlt.

In einem dritten Verfahrensschritt $S_3$ wird ein Bild 15 mit dem Lidarsensor 2 von der Kalibriertafel 11 aufgenommen, und es werden Bereiche mit hoher Reflektivität 18 anhand von Intensitätswerten des von der Kalibriertafel 11 zurückgestrahlten Laserlichts 16, insbesondere in Form der Laserlinien 17, ermittelt.

In einem vierten Verfahrensschritt $S_4$ wird eine Pose der Kalibriertafel 11 relativ zum Lidarsensor 2 anhand der bekannten zusätzlichen Reflektionsbereiche 14 und den ermittelten Bereichen mit hoher Reflektivität 18 ermittelt.

In einem fünften Verfahrensschritt $S_5$ können in einer ersten Alternative beide Bilder 13, 15 anhand der ermittelten Posen in ein gemeinsames Koordinatensystem (GKS) umgerechnet werden. In einer zweiten Alternative kann ein Bild 13, 15 anhand der ermittelten Posen in das Koordinatensystem des anderen Bildes 15, 13 umgerechnet werden. So kann ein Bild 13 der Kamera 1 in das Lidarkoordinatensystem (LKS) des Lidarsensors 2 umgerechnet werden. Alternativ kann ein Bild 15 des Lidarsensors 2 in das Kamerakoordinatensystem (KKS) der Kamera 1 umgerechnet werden. In einer dritten Alternative werden anhand der ermittelten Posen Umrechnungswerte ermittelt, um zukünftige Bilder 13, 15 in ein gemeinsames Koordinatensystem (GKS) umzurechnen oder um ein zukünftiges Bild 13, 15 in das Koordinatensystem eines anderen zukünftigen Bildes 15, 13 umzurechnen.

Die Erfindung ist nicht auf die beschriebenen Ausführungsbeispiele beschränkt. Im Rahmen der Erfindung sind alle beschriebenen und/oder gezeichneten Merkmale beliebig miteinander kombinierbar. Insbesondere ist es klar, dass die beschriebenen Möglichkeiten zur Transformation lediglich beispielhaft sind und mathematisch noch andere Lösungsmöglichkeiten bestehen.

Bezugszeichenliste

| | |
|---|---|
| Kamera | 1 |
| Lidarsensor | 2 |
| Raumbereich | 3 |
| Roboter | 4 |
| Gehäuse | 5 |
| Überwachungsfeld | 6 |
| Objekt | 7 |
| Verarbeitungseinheit | 8 |
| Wand | 9 |
| Positionskalibrierungssystem | 10 |
| Kalibriertafel | 11 |
| Bekannte Muster | 12 |
| Bild von Kamera | 13 |
| Zusätzliche Reflektionsbereiche | 14 |
| Bild von Lidarsensor | 15 |
| Laserlicht | 16 |
| Laserlinien | 17 |
| Bereiche mit hoher Reflektivität | 18 |
| Bereiche mit niedriger Reflektivität | 19 |
| Verfahrensschritte | $S_1, S_2, S_3$ |

**Patentansprüche**

1.  Verfahren zur Positionskalibrierung einer Kamera (1) und eines Lidarsensors (2) mit einer Kalibriertafel (11), wobei die Kalibriertafel (11) bekannte Muster (12) umfasst, wobei die bekannten Muster (12) unterschiedliche Helligkeit aufweisen und wobei zusätzliche Reflektionsbereiche (14) auf der Kalibriertafel (11) vorhanden sind, die eine höhere Reflektivität aufweisen als die bekannten Muster (12) unterschiedlicher Helligkeit, wobei das Verfahren die folgenden Verfahrensschritte umfasst:

    - Aufnehmen ($S_1$) zumindest eines Bildes (13) von der Kalibriertafel (11) mit der Kamera (1) und Ermitteln einer Pose der Kalibriertafel (11) relativ zur Kamera (1) anhand der bekannten Muster (12);
    - Aussenden ($S_2$) eines Laserlichts (16) vom Lidarsensor (2) auf die Kalibriertafel (11), wobei das Laserlicht (16) mehr als zwei, drei, vier oder mehr als fünf Laserlinien (17) umfasst, die beabstandet zueinander angeordnet sind;
    - Aufnehmen ($S_3$) zumindest eines Bildes (15) mit dem Lidarsensor (2) und Ermitteln von Bereichen mit hoher Reflektivität (18) anhand von Intensitätswerten des von der Kalibriertafel (11) zurückgestrahlten Laserlichts (16);
    - Kompensieren einer Krümmung der Laserlinien (17) durch eine bekannte Abweichung von einer geraden Linie, wobei die Abweichung der auf die Kalibriertafel projizierten Laserlinie von einer geraden Laserlinie einer Look-up-Tabelle entnommen wird, die für jede Laserlinie einmalig berechnet und gespeichert wird;
    - Ermitteln ($S_4$) einer Pose der Kalibriertafel (11) relativ zum Lidarsensor (2) anhand der bekannten zusätzlichen Reflektionsbereiche (14) und den ermittelten Bereichen mit hoher Reflektivität (18);

und folgendem Verfahrensschritt ($S_5$):

a) Umrechnen beider Bilder (13, 15) anhand der ermittelten Posen in ein gemeinsames Koordinatensystem; oder
b) Umrechnen eines Bildes (13, 15) anhand der ermittelten Posen in das Koordinatensystem des anderen Bildes (15, 13);
und/oder
c) Ermitteln von Umrechnungswerten anhand der ermittelten Posen, um zukünftige Bilder (13, 15) in ein gemeinsames Koordinatensystem oder um ein zukünftiges Bild (13, 15) in das Koordinatensystem eines anderen zukünftigen Bildes (15, 13) umzurechnen.

2. Verfahren zur Positionskalibrierung nach Anspruch 1, wobei die Kamera (1) und der Lidarsensor (2) ortsfest zueinander angeordnet sind.

3. Verfahren zur Positionskalibrierung nach Anspruch 1 oder 2, wobei die Kamera (1) und der Lidarsensor (2) das jeweilige Bild (13, 15) simultan aufnehmen.

4. Verfahren zur Positionskalibrierung nach einem der vorstehenden Ansprüche, wobei die zusätzlichen Reflektionsbereiche (14) Reflektionsstreifen umfassen.

5. Verfahren zur Positionskalibrierung nach einem der vorstehenden Ansprüche, wobei die zusätzlichen Reflektionsbereiche (14), insbesondere die Reflektionsstreifen, winkelig zueinander ausgerichtet sind.

6. Verfahren zur Positionskalibrierung nach einem der vorstehenden Ansprüche, wobei die bekannten Muster (12) ChArUco-Muster umfassen.

7. Verfahren zur Positionskalibrierung nach einem der vorstehenden Ansprüche, wobei das Verfahren die folgenden Verfahrensschritte umfasst:

- Lokalisieren der bekannten Muster (12) auf der Kalibriertafel (11);
- Bestimmen der intrinsischen Parameter, insbesondere Brennweite, Brennpunkt und/oder Linsenverzerrung der Kamera (1) anhand der bekannten Muster (12);
- Kalibrierung der Kamera (1) mittels der intrinsischen Parameter der Kamera (1).

8. Verfahren zur Positionskalibrierung nach Anspruch 7, wobei das Verfahren den folgenden Verfahrensschritt umfasst:

- Verwenden einer Vielzahl von Bildern (13), um die intrinsischen Parameter der Kamera (1) zu bestimmen, wobei diejenigen Bilder (13) verworfen werden, bei denen der Projektionsfehler einen Schwellwert überschreitet.

9. Verfahren zur Positionskalibrierung nach einem der vorstehenden Ansprüche, wobei das Verfahren den folgenden Verfahrensschritt umfasst:

- Platzieren der Kalibriertafel (11) derart, dass sie vollständig im Bild der Kamera (1) liegt und dass sie von einer Vielzahl von Scan-Linien, insbesondere Laserlinien (17), des Lidarsensors (2) gekreuzt wird.

10. Verfahren zur Positionskalibrierung nach einem der vorherigen Ansprüche, wobei das Verfahren die folgenden Verfahrensschritte umfasst:

- Ermitteln, welche Abschnitte (18) der zurückgestrahlten Laserlinien (17):

a) einen Intensitätsverlauf haben, der oberhalb eines Schwellwerts liegt;
b) in einer Ebene liegen;

- Abgleichen der ermittelten Abschnitte (18) gegenüber den bekannten zusätzlichen Reflektionsbereichen (14).

11. Verfahren zur Positionskalibrierung nach Anspruch 10, wobei der Verfahrensschritt Abgleichen den folgenden Unterverfahrensschritt umfasst:

- Ermitteln einer Verschiebung und eines Rotationswinkels der ermittelten Abschnitte (18) relativ zum Ursprung der Kalibriertafel (11), um so die Pose der Kalibriertafel (11) relativ zum Lidarsensor (2) zu ermitteln.

12. Verfahren zur Positionskalibrierung nach einem der vorstehenden Ansprüche, wobei das Verfahren die folgenden Verfahrensschritte umfasst:

- Verändern der Position und/oder der Ausrichtung der Kalibriertafel (11) relativ zu einem Verbund aus Kamera (1) und Lidarsensor (2) und Wiederholen zumindest der Verfahrensschritte Aufnehmen ($S_1$), Aussenden ($S_2$), Aufnehmen ($S_3$) und Ermitteln ($S_4$).

13. Positionskalibrierungssystem (10) mit einer Kamera (1), einem Lidarsensor (2), einer Kalibriertafel (11) und einer Verarbeitungseinheit (8), wobei die Kalibriertafel (11) bekannte Muster (12) umfasst, wobei die bekannten Muster (12) unterschiedliche Helligkeit aufweisen und wobei zusätzliche Reflektionsbereiche (14) auf der Kalibriertafel (11) vorhanden sind, die eine höhere Reflektivität aufweisen als die bekannten Muster (12) unterschiedlicher Helligkeit und wobei:

- die Kamera (1) dazu ausgebildet ist, um zumindest ein Bild (13) von der Kalibriertafel (11) aufzunehmen und wobei die Verarbeitungseinheit (8) dazu ausgebildet ist, um eine Pose der Kalibriertafel (11) relativ zur Kamera (1) anhand der bekannten Muster (12) zu ermitteln;
- der Lidarsensor (2) dazu ausgebildet ist, um ein Laserlicht (16) auf die Kalibriertafel (11) auszusenden, wobei das Laserlicht (16) mehr als zwei, drei, vier oder mehr als fünf Laserlinien (17) umfasst, die beabstandet zueinander angeordnet sind;
- der Lidarsensor (2) dazu ausgebildet ist, um zumindest ein Bild (15) aufzunehmen und wobei die Verarbeitungseinheit (8) dazu ausgebildet ist, um Bereiche mit hoher Reflektivität (18) anhand von Intensitätswerten des von der Kalibriertafel (11) zurückgestrahlten Laserlichts (16) zu ermitteln;
- die Verarbeitungseinheit (8) dazu ausgebildet ist, um eine Krümmung der Laserlinien (17) durch eine bekannte Abweichung von einer geraden Linie zu kompensieren, wobei die Abweichung der auf die Kalibriertafel projizierten Laserlinie von einer geraden Laserlinie einer Look-up-Tabelle entnommen wird, die für jede Laserlinie einmalig berechnet und gespeichert wird, und um die Pose der Kalibriertafel (11) relativ zum Lidarsensor (2) anhand der bekannten zusätzlichen Reflektionsbereiche (14) und den ermittelten Bereichen mit hoher Reflektivität (18) zu ermitteln;

und wobei die Verarbeitungseinheit (8) dazu ausgebildet ist, um:

a) beide Bilder (13, 15) anhand der ermittelten Posen in ein gemeinsames Koordinatensystem umzurechnen; oder
b) ein Bild (13, 15) anhand der ermittelten Posen in das Koordinatensystem des anderen Bildes (15, 13) umzurechnen; oder
c) Umrechnungswerte anhand der ermittelten Posen zu ermitteln, um zukünftige Bilder (13, 15) in ein gemeinsames Koordinatensystem oder um ein zukünftiges Bild (13, 15) in das Koordinatensystem eines anderen zukünftigen Bildes (15, 13) umzurechnen.

14. Autonom fahrendes Fahrzeug, insbesondere in Form eines Staplers, mit einer Kamera (1), einem Lidarsensor (2) und einer Verarbeitungseinheit (8), wobei die Kamera (1) und der Lidarsensor (2) gemäß einem der Ansprüche 1 bis 12 zueinander kalibriert sind, wobei der Lidarsensor (2) dazu ausgebildet ist, um fortlaufend die Fahrbahn vor dem Fahrzeug auf Hindernisse zu überwachen, wobei die Verarbeitungseinheit (8) dazu ausgebildet ist, um zumindest ein Objekt (7) in den Daten des Lidarsensors (2), das kleiner als ein Schwellwert ist, mit den Daten der Kamera (1) abzugleichen, um für den Fall, dass:

a) von dem Objekt (7) eine Kollisionsgefahr ausgeht, das Fahrzeug abzubremsen und/oder eine Lenkbewegung einzuleiten und/oder eine Warnung auszugeben;
b) von dem Objekt (7) keine Kollisionsgefahr ausgeht, keinen Eingriff in die Fahrbewegung des Fahrzeugs vorzunehmen und/oder keine Warnung auszugeben.

**Claims**

1. A method for position calibration of a camera (1) and a LIDAR sensor (2) using a calibration board (11), wherein the calibration board (11) comprises known patterns (12), wherein the known patterns (12) have different brightnesses and wherein additional reflection regions (14) are present on the calibration board (11) that have a higher reflectivity than the known patterns (12) of different brightness, wherein the method comprises the following method steps:

- recording ($S_1$) at least one image (13) of the calibration board (11) with the camera (1) and determining a pose of the calibration board (11) relative to the camera (1) based on the known patterns (12);
- transmitting ($S_2$) a laser light (16) from the LIDAR sensor (2) to the calibration board (11), wherein the laser light (16) comprises more than two, three, four or more than five laser lines (17) which are arranged spaced apart from one another;
- recording ($S_3$) at least one image (15) with the LIDAR sensor (2) and determining regions of high reflectivity (18) based on intensity values of the laser light (16) reflected by the calibration board (11);
- compensating a curvature of the laser lines (17) by a known deviation from a straight line, wherein the deviation of the laser line projected onto the calibration board from a straight laser line is taken from a lookup table which is calculated and stored once for each laser line;
- determining ($S_4$) a pose of the calibration board (11) relative to the LIDAR sensor (2) based on the known additional reflection regions (14) and the determined regions of high reflectivity (18);

and the following method step ($S_5$):

a) converting both images (13, 15) into a common coordinate system based on the determined poses; or
b) converting one image (13, 15) into the coordinate system of the other image (15, 13) based on the determined poses;
and/or
(c) determining conversion values based on the determined poses to convert future images (13, 15) into a common coordinate system or to convert a future image (13, 15) into the coordinate system of another future image (15, 13).

2. A method for position calibration according to claim 1, wherein the camera (1) and the LIDAR sensor (2) are arranged in fixed positions relative to one another.

3. A method for position calibration according to claim 1 or 2, wherein the camera (1) and the LIDAR sensor (2) simultaneously record the respective image (13, 15).

4. A method for position calibration according to any one of the preceding claims, wherein the additional reflection regions (14) comprise reflection strips.

5. A method for position calibration according to any one of the preceding claims, wherein the additional reflection regions (14), in particular the reflection strips, are oriented at an angle to one another.

6. A method for position calibration according to any one of the preceding claims, wherein the known patterns (12) comprise ChArUco patterns.

7. A method for position calibration according to any one of the preceding claims, wherein the method comprises the following method steps:

- locating the known patterns (12) on the calibration board (11);
- determining the intrinsic parameters, in particular the focal length, focal point and/or lens distortion of the camera (1) based on the known patterns (12);
- calibrating the camera (1) by means of the intrinsic parameters of the camera (1).

8. A method for position calibration according to claim 7, wherein the method comprises the following method step:

- using a plurality of images (13) to determine the intrinsic parameters of the camera (1), wherein those images (13) are discarded in which the projection error exceeds a threshold value.

9. A method for position calibration according to any one of the preceding claims, wherein the method comprises the following method step:

- placing the calibration board (11) such that it lies completely in the image of the camera (1) and such that it is crossed by a plurality of scan lines, in particular laser lines (17), of the LIDAR sensor (2).

10. A method for position calibration according to any one of the preceding claims, wherein the method comprises the following method steps:

- determining which sections (18) of the reflected laser lines (17):

a) have an intensity development which lies above a threshold value;
b) lie in one plane;

- comparing the determined sections (18) with respect to the known additional reflection regions (14).

11. A method for position calibration according to claim 10, wherein the method step comparing comprises the following sub-method step:

- determining a displacement and a rotation angle of the determined sections (18) relative to the origin of the calibration board (11) in order thus to determine the pose of the calibration board (11) relative to the LIDAR sensor (2).

12. A method for position calibration according to any one of the preceding claims, wherein the method comprises the following method steps:

- changing the position and/or the alignment of the calibration board (11) relative to an assembly of the camera (1) and the LIDAR sensor (2) and repeating at least the method steps recording ($S_1$), transmitting ($S_2$), recording ($S_3$) and determining ($S_4$).

13. A position calibration system (10) comprising a camera (1), a LIDAR sensor (2), a calibration board (11), and a processing unit (8), wherein the calibration board (11) comprises known patterns (12), wherein the known patterns (12) have different brightnesses and wherein additional reflection regions (14) are present on the calibration board (11) that have a higher reflectivity than the known patterns (12) of different brightness, and wherein:

- the camera (1) is configured to record at least one image (13) of the calibration board (11) and wherein the processing unit (8) is configured to determine a pose of the calibration board (11) relative to the camera (1) based on the known patterns (12);
- the LIDAR sensor (2) is configured to transmit a laser light (16) to the calibration board (11), wherein the laser light (16) comprises more than two, three, four or more than five laser lines (17) which are arranged spaced apart from one another;
- the LIDAR sensor (2) is configured to record at least one image (15) and wherein the processing unit (8) is configured to determine regions of high reflectivity (18) based on intensity values of the laser light (16) reflected by the calibration board (11);
- the processing unit (8) is configured to compensate a curvature of the laser lines (17) by a known deviation from a straight line, wherein the deviation of the laser line projected onto the calibration board from a straight laser line is taken from a lookup table which is calculated and stored once for each laser line, and to determine the pose of the calibration board (11) relative to the LIDAR sensor (2) based on the known additional reflection regions (14) and the determined regions of high reflectivity (18);

and wherein the processing unit (8) is configured:

a) to convert both images (13, 15) into a common coordinate system based on the determined poses; or
b) to convert one image (13, 15) into the coordinate system of the other image (15, 13) based on the determined poses; or
c) to determine conversion values based on the determined poses to convert future images (13, 15) into a common coordinate system or to convert a future image (13, 15) into the coordinate system of another future image (15, 13).

14. An autonomously driving vehicle, in particular in the form of a forklift truck, comprising a camera (1), a LIDAR sensor (2), and a processing unit (8), wherein the camera (1) and the LIDAR sensor (2) are calibrated with respect to one another in accordance with any one of the claims 1 to 12, wherein the LIDAR sensor (2) is configured to continuously monitor the road in front of the vehicle for obstacles, wherein the processing unit (8) is configured to compare at least one object (7) in the data of the LIDAR sensor (2) that is smaller than a threshold value with the data of the camera (1) in order, in the event that:

a) the object (7) poses a risk of collision, to brake the vehicle and/or to initiate a steering movement and/or to issue a warning;
b) the object (7) does not pose a risk of collision, not to intervene in the driving movement of the vehicle and/or not to issue a warning.

**Revendications**

1. Procédé d'étalonnage de position d'une caméra (1) et d'un capteur lidar (2) à l'aide d'un panneau d'étalonnage (11), le panneau d'étalonnage (11) comprenant des motifs connus (12), les motifs connus (12) présentant des luminosités différentes, et des zones de réflexion supplémentaires (14) étant présentes sur le panneau d'étalonnage (11), lesquelles présentent une réflectivité plus élevée que les motifs connus (12) de luminosités différentes, le procédé comprenant les étapes suivantes consistant à :

   - enregistrer ($S_1$) au moins une image (13) du panneau d'étalonnage (11) à l'aide de la caméra (1), et déterminer une pose du panneau d'étalonnage (11) par rapport à la caméra (1) à l'aide des motifs connus (12) ;
   - émettre ($S_2$) un rayon laser (16) depuis le capteur lidar (2) vers le panneau d'étalonnage (11), la lumière laser (16) présentant plus de deux, trois, quatre ou plus de cinq lignes laser (17) disposées à distance les unes des autres ;
   - enregistrer ($S_3$) au moins une image (15) à l'aide du capteur lidar (2) et déterminer des zones à forte réflectivité (18) à l'aide des valeurs d'intensité de la lumière laser (16) renvoyée par le panneau d'étalonnage (11) ;
   - compenser une courbure des lignes laser (17) par un écart connu par rapport à une ligne droite, l'écart de la ligne laser, projetée sur le panneau d'étalonnage, par rapport à une ligne laser droite étant tiré d'une table de consultation qui est calculée et stockée une seule fois pour chaque ligne laser ;
   - déterminer ($S_4$) une pose du panneau d'étalonnage (11) par rapport au capteur lidar (2) à l'aide des zones de réflexion supplémentaires connues (14) et des zones à forte réflectivité (18) déterminées ;

   et comprenant l'étape suivante ($S_5$) consistant à :

   a) convertir par calcul les deux images (13, 15) en un système de coordonnées commun à l'aide des poses déterminées ; ou
   b) convertir par calcul une image (13, 15) en le système de coordonnées de l'autre image (15, 13) à l'aide des poses déterminées ;
   et/ou
   c) déterminer des valeurs de conversion à l'aide des poses déterminées, pour convertir par calcul des images futures (13, 15) en un système de coordonnées commun, ou pour convertir par calcul une image future (13, 15) en le système de coordonnées d'une autre image future (15, 13).

2. Procédé d'étalonnage de position selon la revendication 1,
   dans lequel la caméra (1) et le capteur lidar (2) sont disposés de manière fixe l'un par rapport à l'autre.

3. Procédé d'étalonnage de position selon la revendication 1 ou 2,
   dans lequel la caméra (1) et le capteur lidar (2) enregistrent simultanément l'image respective (13, 15).

4. Procédé d'étalonnage de position selon l'une des revendications précédentes,
   dans lequel les zones de réflexion supplémentaires (14) comprennent des bandes réfléchissantes.

5. Procédé d'étalonnage de position selon l'une des revendications précédentes,
   dans lequel les zones de réflexion supplémentaires (14), en particulier les bandes réfléchissantes, sont orientées selon un angle les unes par rapport aux autres.

6. Procédé d'étalonnage de position selon l'une des revendications précédentes,
   dans lequel les motifs connus (12) comprennent des motifs ChArUco.

**7.** Procédé d'étalonnage de position selon l'une des revendications précédentes,
le procédé comprenant les étapes suivantes consistant à :

- localiser les motifs connus (12) sur le panneau d'étalonnage (11) ;
- définir les paramètres intrinsèques, en particulier la distance focale, le point focal et/ou la distorsion de la lentille de la caméra (1) à l'aide des motifs connus (12) ;
- étalonner la caméra (1) au moyen des paramètres intrinsèques de la caméra (1).

**8.** Procédé d'étalonnage de position selon la revendication 7,
le procédé comprenant l'étape suivante consistant à :

- utiliser une pluralité d'images (13) pour définir les paramètres intrinsèques de la caméra (1), en rejetant les images (13) pour lesquelles l'erreur de projection dépasse une valeur seuil.

**9.** Procédé d'étalonnage de position selon l'une des revendications précédentes,
le procédé comprenant l'étape suivante consistant à :

- placer le panneau d'étalonnage (11) de telle sorte qu'il se trouve entièrement dans l'image de la caméra (1) et qu'il soit traversé par une multitude de lignes de balayage, en particulier des lignes laser (17), du capteur lidar (2).

**10.** Procédé d'étalonnage de position selon l'une des revendications précédentes,
le procédé comprenant l'étape suivante consistant à :

- déterminer quelles sections (18) des lignes laser réfléchies (17)

    a) ont une courbe d'intensité supérieure à une valeur seuil ;
    b) se trouvent dans un plan ;

- comparer les sections déterminées (18) aux zones de réflexion supplémentaires connues (14).

**11.** Procédé d'étalonnage de position selon la revendication 10,
dans lequel l'étape de comparaison comprend la sous-étape suivante consistant à :

- déterminer un déplacement et un angle de rotation des sections déterminées (18) par rapport à l'origine du panneau d'étalonnage (11), afin de déterminer ainsi la pose du panneau d'étalonnage (11) par rapport au capteur lidar (2).

**12.** Procédé d'étalonnage de position selon l'une des revendications précédentes,
le procédé comprenant les étapes suivantes consistant à :

- modifier la position et/ou l'orientation du panneau d'étalonnage (11) par rapport à un ensemble composé d'une caméra (1) et d'un capteur lidar (2), et répéter au moins les étapes consistant à enregistrer ($S_1$), émettre ($S_2$), enregistrer (S3) et déterminer (S4).

**13.** Système d'étalonnage de position (10) comprenant une caméra (1), un capteur lidar (2), un panneau d'étalonnage (11) et une unité de traitement (8), le panneau d'étalonnage (11) comprenant des motifs connus (12), les motifs connus (12) présentant des luminosités différentes, et des zones de réflexion supplémentaires (14) étant présentes sur le panneau d'étalonnage (11), lesquelles présentent une réflectivité plus élevée que les motifs connus (12) de luminosités différentes,
dans lequel

- la caméra (1) est conçue pour enregistrer au moins une image (13) du panneau d'étalonnage (11), et l'unité de traitement (8) est conçue pour déterminer une pose du panneau d'étalonnage (11) par rapport à la caméra (1) à l'aide des motifs connus (12) ;
- le capteur lidar (2) est conçu pour émettre une lumière laser (16) vers le panneau d'étalonnage (11), la lumière laser (16) présentant plus de deux, trois, quatre ou plus de cinq lignes laser (17) disposées à distance les unes des autres ;
- le capteur lidar (2) est conçu pour enregistrer au moins une image (15), et l'unité de traitement (8) est conçue

17

pour déterminer des zones à forte réflectivité (18) à l'aide des valeurs d'intensité de la lumière laser (16) renvoyée par le panneau d'étalonnage (11) ;
- l'unité de traitement (8) est conçue pour compenser une courbure des lignes laser (17) par un écart connu par rapport à une ligne droite, l'écart de la ligne laser, projetée sur le panneau d'étalonnage, par rapport à une ligne laser droite étant tiré d'une table de consultation qui est calculée et stockée une seule fois pour chaque ligne laser, et pour déterminer la pose du panneau d'étalonnage (11) par rapport au capteur lidar (2) à l'aide des zones de réflexion supplémentaires connues (14) et des zones à forte réflectivité (18) déterminées ;

et l'unité de traitement (8) est conçue pour

a) convertir par calcul les deux images (13, 15) en un système de coordonnées commun à l'aide des poses déterminées ; ou
b) convertir par calcul une image (13, 15) en le système de coordonnées de l'autre image (15, 13) à l'aide des poses déterminées; ou
c) déterminer des valeurs de conversion à l'aide des poses déterminées pour convertir par calcul des images futures (13, 15) en un système de coordonnées commun ou pour convertir par calcul une image future (13, 15) en le système de coordonnées d'une autre image future (15, 13).

14. Véhicule autonome, en particulier sous la forme d'un chariot élévateur, comprenant une caméra (1), un capteur lidar (2) et une unité de traitement (8), la caméra (1) et le capteur lidar (2) étant étalonnés l'un par rapport à l'autre conformément à l'une des revendications 1 à 12, le capteur lidar (2) étant conçu pour surveiller en continu la chaussée devant le véhicule à la recherche d'obstacles, l'unité de traitement (8) étant conçue pour comparer au moins un objet (7) dans les données du capteur lidar (2), qui est plus petit qu'une valeur seuil, avec les données de la caméra (1), pour

a) dans le cas où l'objet (7) présente un risque de collision, freiner le véhicule et/ou initier un mouvement de braquage et/ou émettre un avertissement ;
b) dans le cas où l'objet (7) ne présente aucun risque de collision, ne pas intervenir dans le mouvement du véhicule et/ou ne pas émettre d'avertissement.

Fig. 1

EP 4 357 809 B1

Fig. 2

Fig. 3

Fig. 4

Fig. 5

17, 18

17, 19

17, 19

17, 18

14

14

14

14

11

Fig. 6

Fig. 7

Fig. 8

0,003m
0,002 m
0,001 m
0 m
- 0,001 m
- 0,002 m
- 0,003 m

17

Abstand vom Startpunkt (linker Rand der Kalibriertafel) [m]

Fig. 9

Fig. 10A

Fig. 10B

EP 4 357 809 B1

Fig. 11

Fig. 10C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 110766758 B
- US 2020174107 A1
- US 2021316669 A1
- US 2015352859 A1

**In der Beschreibung aufgeführte Nicht-Patentliteratur**

- A novel method for lidar camera calibration by plane fitting. **AUS CHAI, Z.** ; **SUN, Y.** ; **XIONG, Z.** 2018 IEEE/ASME International Conference on Advanced Intelligent Mechatronics (AIM). IEEE, 2018, 286-291

- **GARRIDO-JURADO, S.** ; **MU-SALINAS, R.** ; **MAD-RID-CUEVAS, F.** ; **MAR JIM Z, M.** Automatic generation and detection of highly reliable fiducial markers under occlusion. *Pattern Recogn.*, June 2014, vol. 47 (6), 2280-2292